(19) Europäisches Patentamt
European Patent Office
Office européen des brevets

(11) EP 4 223 537 B1

(12) **EUROPEAN PATENT SPECIFICATION**

(45) Date of publication and mention of the grant of the patent:
**15.04.2026 Bulletin 2026/16**

(21) Application number: **21874860.6**

(22) Date of filing: **15.07.2021**

(51) International Patent Classification (IPC):
***B41J 2/01*** *(2006.01)* ***C09D 11/30*** *(2014.01)*
***B41M 5/00*** *(2006.01)* ***C09D 11/101*** *(2014.01)*
***B41M 7/00*** *(2006.01)* ***C09D 11/38*** *(2014.01)*
***C09D 11/102*** *(2014.01)*

(52) Cooperative Patent Classification (CPC):
**C09D 11/101; C09D 11/102; C09D 11/38;**
B41M 7/0081

(86) International application number:
**PCT/JP2021/026684**

(87) International publication number:
**WO 2022/070556 (07.04.2022 Gazette 2022/14)**

(54) **INK-JET INK AND INK-JET RECORDING METHOD**

TINTENSTRAHLTINTE UND TINTENSTRAHLAUFZEICHNUNGSVERFAHREN

ENCRE POUR JET D'ENCRE ET PROCÉDÉ D'IMPRESSION PAR JET D'ENCRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2020 JP 2020163388**

(43) Date of publication of application:
**09.08.2023 Bulletin 2023/32**

(73) Proprietor: **FUJIFILM Corporation**
**Tokyo 106-8620 (JP)**

(72) Inventors:
- **TAKESHITA, Kohei**
**Ashigarakami-gun, Kanagawa 258-8577 (JP)**
- **SUZUKI, Shota**
**Ashigarakami-gun, Kanagawa 258-8577 (JP)**

(74) Representative: **Klunker IP Patentanwälte PartG mbB**
**Destouchesstraße 68**
**80796 München (DE)**

(56) References cited:
**EP-A1- 3 202 808** **EP-A1- 3 677 650**
**WO-A1-2016/151904** **WO-A1-2017/135084**
**WO-A1-2017/138434** **WO-A1-2018/042916**
**WO-A1-2019/188522** **JP-A- 2013 202 928**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 223 537 B1

## Description

BACKGROUND OF THE INVENTION

1. Field of the Invention

The present disclosure relates to an ink jet ink and an ink jet recording method.

2. Description of the Related Art

Various studies have been performed on ink jet inks and ink jet recording methods.
For example, JP6584677B discloses, as an ink jet ink composition that can form an image having high adhesiveness to a plastic substrate and has high dispersion stability, an ink jet ink composition containing water and particles including a chain polymer including a specific structural unit and a hydrophilic group and including a polymerizable group.
In addition, JP6047904B discloses, as an ink jet recording method that provides high curability, high fillability, high adhesiveness, and high ejection stability, an ink jet recording method including a first step of ejecting and landing, to a recording medium, from a head, droplets of a photocurable ink composition containing a solvent, a polymerizable compound, and a photopolymerization initiator, the polymerizable compound being particles dispersed in the solvent, to form an image, a second step of evaporating the solvent included in the photocurable ink composition constituting the image, and a third step of irradiating the image having been subjected to the second step, with light, wherein, at starting of the irradiation in the third step, the content of the polymerizable compound included in the photocurable ink composition constituting the image having been subjected to the second step, relative to the total mass of the ink composition, is 20 to 90 mass%. WO 2019/188522 A1 also represents a relevant prior art.

SUMMARY OF THE INVENTION

However, there are some cases where further improvements in the preservation stability of such ink jet inks and the rubfastness of recorded images are in demand.
Objects of embodiments according to the present disclosure are to provide an ink jet ink that has high preservation stability and provides a recorded image having high rubfastness, and an ink jet recording method that uses the ink jet ink and enables recording of an image having high rubfastness.
The present invention is defined in the appended claims.
Embodiments according to the present disclosure provide an ink jet ink that has high preservation stability and provides a recorded image having high rubfastness and an ink jet recording method that uses the ink jet ink and enables recording of an image having high rubfastness.

DESCRIPTION OF THE PREFERRED EMBODIMENTS

In the present disclosure, numerical ranges described as "a value 'to' another value" mean ranges including the value and the other value respectively as the minimum value and the maximum value.
In the present disclosure, the amount of each of components in compositions means, when a plurality of substances belonging to such a component are present in such a composition, the total amount of the plurality of substances present in the composition unless otherwise specified.
In the present disclosure, among numerical ranges described in series, the upper limit value or the lower limit value of a numerical range may be replaced by the upper limit value or the lower limit value of one of other numerical ranges described in series, or may be replaced by a value in Examples.
In the present disclosure, the term "step" includes not only an independent step, but also a step that is not clearly distinguished from another step but that achieves the intended result of the step.
In the present disclosure, "*" in chemical formulas represent bonding sites.
In the present disclosure, the concept of "images" encompasses, in addition to patterned images (such as characters, symbols, and figures), solid images.
In the present disclosure, "light" is a concept that encompasses actinic energy rays such as γ-rays, β-rays, electron beams, ultraviolet radiation, and visible radiation.
In the present disclosure, ultraviolet radiation may be referred to as "UV (Ultra Violet) light".
In the present disclosure, light emitted from an LED (Light Emitting Diode) light source may be referred to as "LED light".
In the present disclosure, "(meth)acrylic acid" is a concept that encompasses both of acrylic acid and methacrylic

acid; "(meth)acrylate" is a concept that encompasses both of acrylate and methacrylate; and "(meth)acryloyl group" is a concept that encompasses both of an acryloyl group and a methacryloyl group.

Ink jet ink

The ink jet ink according to the present disclosure (hereafter, also simply referred to as "ink") includes water, a water-soluble organic solvent, and particles including a polymer P and a polymerizable monomer M, wherein, when a mass content of the water-soluble organic solvent is defined as Ws and a mass content of the polymerizable monomer M is defined as Wm, a Ws/Wm ratio is 1.1 or more, and ΔHSP(s-m), which is an HSP distance between the water-soluble organic solvent and the polymerizable monomer M, is 15.0 $MPa^{1/2}$ to 25.0 $MPa^{1/2}$.

The ink according to the present disclosure has high preservation stability and provides a recorded image having high rubfastness.

The reason why such advantages are provided is inferred as follows.

In a form of image recording in which an ink jet ink containing water and particles including a polymer and a polymerizable monomer is landed to a substrate, and the landed ink is cured by irradiation with an actinic energy ray and/or application of heat to obtain an image, both the preservation stability of the ink and the rubfastness of the recorded image are in demand in some cases.

Specifically, in this form of image recording, curing mainly proceeds within particles while curing between particles (specifically, bonding between particles) does not proceed; this results in insufficient strength of the film (namely, the image) as a whole and the image has insufficient rubfastness in some cases. The phenomenon in which curing between particles is less likely to proceed is noticeable particularly when the time from landing of the ink to the starting of irradiation with an actinic energy ray is shortened (to, for example, 1.00 second or less).

In order to improve the rubfastness of the image, in the ink having been applied to a substrate, seepage of the polymerizable monomer from the particles is desirably promoted, to thereby promote curing between particles, to promote curing the film (namely, the image) as a whole, inferentially. A method of promoting seepage of the polymerizable monomer from the particles may be a method of lowering ΔHSP(s-m), which is the HSP distance between the water-soluble organic solvent and the polymerizable monomer, to thereby promote, in the ink droplets having been applied to a substrate, seepage of the polymerizable monomer from the particles.

However, when seepage of the polymerizable monomer M from the particles is excessively promoted, even in the ink to be applied to the substrate, seepage of the polymerizable monomer from the particles occurs, which results in degradation of the preservation stability of the ink in some cases.

For such problems, in the ink according to the present disclosure, the Ws/Wm ratio is 1.1 or more and ΔHSP(s-m) is 15.0 $MPa^{1/2}$ to 25.0 $MPa^{1/2}$.

In the ink according to the present disclosure, the Ws/Wm ratio is 1.1 or more (roughly, containing a relatively large amount of water-soluble organic solvent relative to the amount of the polymerizable monomer M in the particles), and ΔHSP(s-m) is 25.0 $MPa^{1/2}$ or less, so that, during application of the ink onto a substrate, in the ink on the substrate, the polymerizable monomer M becomes likely to seep out from the particles. This promotes curing between particles (specifically, bonding between particles), to promote curing of the film (namely, the image) as a whole, which results in improvement in the rubfastness of the image.

On the other hand, in the ink according to the present disclosure, ΔHSP(s-m) is 15.0 $MPa^{1/2}$ or more, so that, in the ink to be applied to the substrate, seepage of the polymerizable monomer from the particles is suppressed, to suppress degradation of the preservation stability of the ink.

In the above-described way, the ink according to the present disclosure inferentially provides advantages of achieving high preservation stability and high rubfastness of the recorded image.

Ws/Wm ratio

In the ink according to the present disclosure, when the mass content of the water-soluble organic solvent is defined as Ws and the mass content of the polymerizable monomer M is defined as Wm, the Ws/Wm ratio is 1.1 or more.

When the Ws/Wm ratio is 1.1 or more, the rubfastness of the image is improved. The reason for this is that the ink contains a relatively large amount of the water-soluble organic solvent relative to the amount of the polymerizable monomer M, so that seepage of the polymerizable monomer M from the specified particles is promoted inferentially.

From the viewpoint of further improving the rubfastness of the image, the Ws/Wm ratio is preferably 1.3 or more, more preferably 1.5 or more, still more preferably 2.0 or more.

On the other hand, from the viewpoint of further improving the preservation stability of the ink, the Ws/Wm ratio is preferably 6.5 or less, more preferably 6.3 or less, still more preferably 6.0 or less.

The Ws/Wm ratio is particularly preferably in a range of, for example, 2.0 to 6.0. ΔHSP(s-m)

In the ink according to the present disclosure, ΔHSP(s-m), which is the HSP distance between the water-soluble organic

solvent and the polymerizable monomer M, is 15.0 $MPa^{1/2}$ to 25.0 $MPa^{1/2}$.

When ΔHSP(s-m) is 15.0 $MPa^{1/2}$ or more, the preservation stability of the ink is improved. The reason for this is that excessive seepage of the polymerizable monomer M from the specified particles is suppressed inferentially.

From the viewpoint of further improving the preservation stability of the ink, ΔHSP(s-m) is preferably 16.0 $MPa^{1/2}$ or more, more preferably 17.0 $MPa^{1/2}$ or more.

When ΔHSP(s-m) is 25.0 $MPa^{1/2}$ or less, the rubfastness of the image is improved. The reason for this is that seepage of the polymerizable monomer M from the specified particles is promoted inferentially.

From the viewpoint of further improving the rubfastness of the image, ΔHSP(s-m) is preferably 24.0 $MPa^{1/2}$ or less, more preferably 23.0 $MPa^{1/2}$ or less, still more preferably 21.0 $MPa^{1/2}$ or less.

In the present disclosure, ΔHSP(s-m), which is the HSP distance between the water-soluble organic solvent and the polymerizable monomer M, is a value calculated by the following Formula (X1).

$$\Delta HSP(s\text{-}m) = \Sigma(\Delta HSP(si\text{-}mj) \times M_{si} \times M_{mj}) \qquad \text{Formula (X1)}$$

In Formula (X1),

i and j each independently represent an integer of 1 or more,
$M_{si}$ represents the mass fraction (specifically, a value of more than 0 and less than 1) of the i-th solvent species relative to the total amount of the water-soluble organic solvents contained in the ink,
$M_{mj}$ represents the mass fraction (specifically, a value of more than 0 and less than 1) of the j-th monomer species relative to the total amount of the polymerizable monomers M contained in the ink, and
ΔHSP(si-mj) represents the HSP distance between the i-th solvent species and the j-th monomer species.

For example, let us assume a case where the ink contains, as three species of water-soluble organic solvents,

a solvent s1 having a mass fraction of 0.1 relative to the total amount of the water-soluble organic solvents,
a solvent s2 having a mass fraction of 0.2 relative to the total amount of the water-soluble organic solvents, and
a solvent s3 having a mass fraction of 0.7 relative to the total amount of the water-soluble organic solvents, and contains, as three species of polymerizable monomers M,
a monomer m1 having a mass fraction of 0.3 relative to the total amount of the polymerizable monomers M,
a monomer m2 having a mass fraction of 0.3 relative to the total amount of the polymerizable monomers M, and
a monomer m3 having a mass fraction of 0.4 relative to the total amount of the polymerizable monomers M.

In this case,

when the HSP distance between the solvent s1 and the monomer m1 is defined as ΔHSP(s1-m1),
the HSP distance between the solvent s1 and the monomer m2 is defined as ΔHSP(s1-m2),
the HSP distance between the solvent s1 and the monomer m3 is defined as ΔHSP(s1-m3),
the HSP distance between the solvent s2 and the monomer m1 is defined as ΔHSP(s2-m1),
the HSP distance between the solvent s2 and the monomer m2 is defined as ΔHSP(s2-m2),
the HSP distance between the solvent s2 and the monomer m3 is defined as ΔHSP(s2-m3),
the HSP distance between the solvent s3 and the monomer m1 is defined as ΔHSP(s3-m1),
the HSP distance between the solvent s3 and the monomer m2 is defined as ΔHSP(s3-m2), and
the HSP distance between the solvent s3 and the monomer m3 is defined as ΔHSP(s3-m3),
ΔHSP(s-m) is calculated by Formula (X) in the following manner.

$$
\begin{aligned}
&\Delta HSP(s\text{-}m)\\
&= \Sigma(\Delta HSP(si\text{-}mj) \times M_{si} \times M_{mj})\\
&= \Delta HSP(s1\text{-}m1) \times 0.1 \times 0.3\\
&+ \Delta HSP(s1\text{-}m2) \times 0.1 \times 0.3\\
&+ \Delta HSP(s1\text{-}m3) \times 0.1 \times 0.4\\
&+ \Delta HSP(s2\text{-}m1) \times 0.2 \times 0.3\\
&+ \Delta HSP(s2\text{-}m2) \times 0.2 \times 0.3\\
&+ \Delta HSP(s2\text{-}m3) \times 0.2 \times 0.4\\
&+ \Delta HSP(s3\text{-}m1) \times 0.7 \times 0.3\\
&+ \Delta HSP(s3\text{-}m2) \times 0.7 \times 0.3\\
&+ \Delta HSP(s3\text{-}m3) \times 0.7 \times 0.4
\end{aligned}
$$

Hereinafter, the HSP distance (for example, ΔHSP(si-mj)) will be described.

The HSP distance is a value correlating with the miscibility between two substances for comparison (hereafter, referred to as Substance 1 and Substance 2). The smaller the HSP distance, the higher the miscibility between Substance 1 and Substance 2.

The HSP distance is determined by substituting δD (dispersion term) (hereafter, referred to as $\delta D_1$ and $\delta D_2$), δP (polar term) (hereafter, referred to as $\delta P_1$ and $\delta P_2$), and δH (hydrogen-bonding term) (hereafter, referred to as $\delta H_1$ and $\delta H_2$) of Substance 1 and Substance 2 into Formula (A) below. The δD (dispersion term), δP (polar term), and δH (hydrogen-bonding term) used herein are three parameters constituting HSP (namely, Hansen Solubility Parameters).

More specifically, for example, ΔHSP(si-mj), which is the HSP distance between the i-th solvent species and the j-th monomer species, is determined by respectively substituting, into $\delta D_1$, $\delta P_1$, $\delta H_1$, $\delta D_2$, $\delta P_2$, and $\delta H_2$ in Formula (A) below, the dispersion term of the i-th solvent species, the polar term of the i-th solvent species, the hydrogen-bonding term of the i-th solvent species, the dispersion term of the j-th monomer species, the polar term of the j-th monomer species, and the hydrogen-bonding term of the j-th monomer species.

$$\text{HSP distance} = \sqrt{4(\delta D_1 - \delta D_2)^2 + (\delta P_1 - \delta P_2)^2 + (\delta H_1 - \delta H_2)^2} \quad \cdots \text{Formula (A)}$$

For each of compounds corresponding to the water-soluble organic solvents or the polymerizable monomers M, the dispersion term (δD), the polar term (δP), and the hydrogen-bonding term (δH) are determined in the following manner.

The structural formulas of the compounds are converted, using structural formula editor software (ChemBioDraw Ultra 13.0), into Smiles strings. Subsequently, in the obtained Smiles-string polymers, the bonding points * are written as X, and Y-MB of HSPiP (HSPiP 4th edition 4.1.07) is used to calculate the δD, δP, and δH values of the compounds.

Ws/Wp ratio

In the ink according to the present disclosure, when the mass content of the water-soluble organic solvent is defined as Ws and the mass content of the polymer P is defined as Wp, the Ws/Wp ratio is preferably 0.9 to 6.4, more preferably 0.9 to 6.3, still more preferably 1.0 to 6.0, yet more preferably 1.5 to 6.0, still yet more preferably 2.0 to 6.0.

When the Ws/Wp ratio is 0.9 or more, the rubfastness of the image is further improved.

When the Ws/Wp ratio is 6.4 or less, the preservation stability of the ink is further improved.

In the present disclosure, when the polymer P contained in the ink includes neutralized anionic groups described later (for example, a salt of carboxy groups (for example, -COONa)), in order to calculate the Ws/Wp ratio, neutralized anionic groups in the polymer P (for example, a salt of carboxy groups (for example, -COONa)) are regarded as unneutralized anionic groups (for example, carboxy groups) in calculation of the Ws/Wp ratio. In other words, Wp in this case is the mass content of the polymer P in which the neutralized anionic groups in the polymer P are regarded as unneutralized anionic groups.

$\Delta$HSP(s-p)

In the ink according to the present disclosure, $\Delta$HSP(s-p), which is the HSP distance between the polymer P and the water-soluble organic solvent, is preferably 7.0 MPa$^{1/2}$ to 20.0 MPa$^{1/2}$, more preferably 8.0 MPa$^{1/2}$ to 16.0 MPa$^{1/2}$, still more preferably 8.5 MPa$^{1/2}$ to 15.5 MPa$^{1/2}$, yet more preferably 9.0 MPa$^{1/2}$ to 15.0 MPa$^{1/2}$.
When $\Delta$HSP(s-p) is 7.0 MPa$^{1/2}$ or more, the preservation stability of the ink is further improved.
When $\Delta$HSP(s-p) is 20.0 MPa$^{1/2}$ or less, the rubfastness of the image is further improved.
$\Delta$HSP(s-p) is specifically a value determined by the following Formula (X2).

$$\Delta HSP(s\text{-}p) = \Sigma(\Delta HSP(si\text{-}pk) \times M_{si} \times M_{pk}) \qquad \text{Formula (X2)}$$

In Formula (X2),

i and k each independently represent an integer of 1 or more,
$M_{si}$ represents the mass fraction (specifically, a value of more than 0 and less than 1) of the i-th solvent species relative to the total amount of the water-soluble organic solvents contained in the ink,
$M_{pk}$ represents the mass fraction (specifically, a value of more than 0 and less than 1) of the k-th polymer species relative to the total amount of the polymers P contained in the ink, and
$\Delta$HSP(si-pk) represents the HSP distance between the i-th solvent species and the k-th polymer species.

In the present disclosure, when the polymer P contained in the ink includes neutralized anionic groups described later (for example, a salt of carboxy groups (for example, -COONa)), in order to calculate $\Delta$HSP(s-p), neutralized anionic groups in the polymer P are regarded as unneutralized anionic groups (for example, carboxy groups) in calculation of $\Delta$HSP(s-p).
$\Delta$HSP(si-pk) is determined by respectively substituting, into $\delta D_1$, $\delta P_1$, $\delta H_1$, $\delta D_2$, $\delta P_2$, and $\delta H_2$ in Formula (A) above, the dispersion term of the i-th solvent species, the polar term of the i-th solvent species, the hydrogen-bonding term of the i-th solvent species, the dispersion term of the k-th polymer species, the polar term of the k-th polymer species, and the hydrogen-bonding term of the k-th polymer species.
For each of compounds corresponding to the water-soluble organic solvent (for example, i-th solvent species), the dispersion term ($\delta$D), the polar term ($\delta$P), and the hydrogen-bonding term ($\delta$H) are determined by the above-described method.
In the k-th polymer corresponding to the polymer P,

the dispersion term (hereafter, referred to as "$\delta$D(polymer k)"),
the polar term (hereafter, referred to as "$\delta$P(polymer k)"), and
the hydrogen-bonding term (hereafter, referred to as "$\delta$H(polymer k)"),
are determined on the basis of the method described in Journal of Applied Polymer Science, 12, p. 2359 (1968) and provided by K. W. SUH and J. M. CORBETT.

Specifically, $\delta$D(polymer k), $\delta$P(polymer k), and $\delta$H(polymer k) are determined in the following manner.
A sample (namely, the polymer k) (500 mg) is completely dissolved in 10 mL of tetrahydrofuran (THF); to the resultant solution, deionized water is added dropwise until the solution becomes turbid. At the time when the solution becomes turbid, the volume fraction [deionized water/(deionized water + THF)] is defined as Vw.
A sample (namely, the polymer k) (500 mg) is completely dissolved in 10 mL of tetrahydrofuran (THF); to the resultant solution, hexane is added dropwise until the solution becomes turbid. At the time when the solution becomes turbid, the volume fraction [hexane/(hexane + THF)] is defined as Vh.
The obtained Vw and Vh are used in the following Formulas (D1), (P1), and (H1) to determine individually $\delta$D(polymer k), $\delta$P(polymer k), and $\delta$H(polymer k).

$$\delta D(\text{polymer k}) = [Vw^{1/2} \times \delta D(W/T) + Vh^{1/2} \times \delta D(H/T)]/[Vw^{1/2} + Vh^{1/2}] \qquad \text{Formula (D1)}$$

$$\delta P(\text{polymer k}) = [Vw^{1/2} \times \delta P(W/T) + Vh^{1/2} \times \delta P(H/T)]/[Vw^{1/2} + Vh^{1/2}]$$

Formula (P1)

$$\delta H(\text{polymer k}) = [Vw^{1/2} \times \delta H(W/T) + Vh^{1/2} \times \delta H(H/T)]/[Vw^{1/2} + Vh^{1/2}]$$

Formula (H1)

In Formula (D1), the following parameters are values determined individually using the following formulas.

$$\delta D(W/T) = \delta D(\text{THF}) \times (1 - Vw) + \delta D(\text{water}) \times Vw$$

$$\delta D(H/T) = \delta D(\text{THF}) \times (1 - Vh) + \delta D(\text{hexane}) \times Vh$$

$$\delta P(W/T) = \delta P(\text{THF}) \times (1 - Vw) + \delta P(\text{water}) \times Vw$$

$$\delta P(H/T) = \delta P(\text{THF}) \times (1 - Vh) + \delta P(\text{hexane}) \times Vh$$

$$\delta H(W/T) = \delta H(\text{THF}) \times (1 - Vw) + \delta H(\text{water}) \times Vw$$

$$\delta H(H/T) = \delta H(\text{THF}) \times (1 - Vh) + \delta H(\text{hexane}) \times Vh$$

In the above-described formulas, as the following parameters, the following values are used.

δD(THF) = 16.8
δD(water) = 15.5
δD(hexane) = 14.9
δP(THF) = 5.7
δP(water) = 16
δP(hexane) = 0
δH(THF) = 8
δH(water) = 42.3
δH(hexane) = 0

Hereinafter, components that can be contained in the ink according to the present disclosure will be described.

Water

The ink according to the present disclosure contains water.
The water content relative to the total amount of the ink according to the present disclosure is preferably 10

mass% or more, more preferably 20 mass% or more, still more preferably 30 mass% or more, particularly preferably 50 mass% or more.

The upper limit of the water content relative to the total amount of the ink according to the present disclosure is appropriately determined in accordance with the contents of other components, but is, for example, 99 mass%, preferably 95 mass%, more preferably 90 mass%. Water-soluble organic solvent

The ink according to the present disclosure contains at least one water-soluble organic solvent.

In this case, ejection performance of the ink from an ink jet head is ensured.

In the present disclosure, "water-soluble" in "water-soluble organic solvent" means a property of dissolving, in an amount of 1 g or more, in 100 g of water at 25°C.

The amount of the water-soluble organic solvent dissolving in 100 g of water at 25°C is preferably 5 g or more, more preferably 10 g or more.

The water-soluble organic solvent content relative to the total amount of the ink is preferably 1 mass% to 35 mass%, more preferably 5 mass% to 30 mass%, still more preferably 8 mass% to 15 mass%, yet more preferably 10 mass% to 20 mass%.

When the water-soluble organic solvent content is 1 mass% or more, the ink ejection performance is further improved.

When the water-soluble organic solvent content is 35 mass% or less, the preservation stability of the ink is further improved.

Specific examples of the water-soluble organic solvent are as follows.

·Alcohols (for example, methanol, ethanol, propanol, isopropanol, butanol, isobutanol, secondary butanol, tertiary butanol, pentanol, hexanol, cyclohexanol, and benzyl alcohol)

·Polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerol, hexanetriol, thiodiglycol, and 2-methylpropanediol)

·Polyhydric alcohol ethers (for example, ethylene glycol monomethyl ether, ethylene glycol monoethyl ether, ethylene glycol monobutyl ether, diethylene glycol monoethyl ether, diethylene glycol monomethyl ether, diethylene glycol monobutyl ether, propylene glycol monomethyl ether, propylene glycol monobutyl ether, tripropylene glycol monomethyl ether, dipropylene glycol monomethyl ether, dipropylene glycol dimethyl ether, ethylene glycol monomethyl ether acetate, triethylene glycol monomethyl ether, triethylene glycol monoethyl ether, triethylene glycol monobutyl ether, ethylene glycol monophenyl ether, and propylene glycol monophenyl ether)

·Amines (for example, ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, and tetramethylpropylenediamine)

·Amides (for example, formamide, N,N-dimethylformamide, and N,N-dimethylacetamide)

·Heterocycles (for example, 2-pyrrolidone, N-methyl-2-pyrrolidone, cyclohexylpyrrolidone, 2-oxazolidone, 1,3-dimethyl-2-imidazolidinone, and γ-butyrolactone)

·Sulfoxides (for example, dimethyl sulfoxide)

·Sulfones (for example, sulfolane)

·Others (urea, acetonitrile, acetone, and the like)

Water-soluble organic solvent (S-1) having boiling point of 190°C or less

In the ink according to the present disclosure, the water-soluble organic solvent contains at least one water-soluble organic solvent (S-1) having a boiling point of 190°C or less (hereafter, also simply referred to as "water-soluble organic solvent (S-1)").

As a result, the blocking resistance of the recorded image is further improved.

In the present disclosure, high blocking resistance means a property of suppressing blocking of an image (specifically, a phenomenon in which, in the case of placing an article on and in contact with the image, the contact article adheres to the image).

In the present disclosure, the boiling point means the boiling point at 1 atm (101325 Pa).

Examples of the water-soluble organic solvent (S-1) include propylene glycol (boiling point: 188°C), propylene glycol monomethyl ether (boiling point: 121°C), ethylene glycol monomethyl ether (boiling point: 124°C), propylene glycol monoethyl ether (boiling point: 133°C), ethylene glycol monoethyl ether (boiling point: 135°C), propylene glycol monopropyl ether (boiling point: 149°C), ethylene glycol monopropyl ether (boiling point: 151°C), propylene glycol monobutyl ether (boiling point: 170°C), ethylene glycol monobutyl ether (boiling point: 171°C), 2-ethyl-1-hexanol (boiling point: 187°C), dipropylene glycol monomethyl ether (boiling point: 188°C), diethylene glycol dimethyl ether (boiling point: 162°C), diethylene glycol diethyl ether (boiling point: 188°C), and dipropylene glycol dimethyl ether (boiling point: 175°C).

From the viewpoint of further improving the blocking resistance of the image, of the water-soluble organic solvent in the ink according to the present disclosure, the content of the water-soluble organic solvent (S-1) is 60 mass% or more, preferably 70 mass% or more.

Of the water-soluble organic solvent in the ink according to the present disclosure, the content of the water-soluble organic solvent (S-1) having a boiling point of 190°C or less may be 100 mass%, or may be less than 100 mass%.

When the ink contains the water-soluble organic solvent (S-1), the water-soluble organic solvent (S-1) content relative to the total ink amount is preferably 1 mass% to 35 mass%, more preferably 5 mass% to 30 mass%, still more preferably 8 mass% to 25 mass%, yet more preferably 10 mass% to 20 mass%.

Organic solvent having boiling point of more than 190°C

In the ink according to the present disclosure, the water-soluble organic solvent may contain at least one water-soluble organic solvent having a boiling point of more than 190°C.

Examples of the water-soluble organic solvent having a boiling point of more than 190°C include 2-methyl-1,3-propanediol (MP diol) (boiling point: 214°C), ethylene glycol (boiling point: 196°C), 1,2-butanediol (boiling point: 193°C), glycerol (boiling point: 290°C), 1,2-hexanediol (boiling point: 223°C), 1,3-propanediol (boiling point: 213°C), diethylene glycol (boiling point: 245°C), diethylene glycol monobutyl ether (boiling point: 230°C), triethylene glycol (boiling point: 285°C), dipropylene glycol (boiling point: 232°C), tripropylene glycol (boiling point: 267°C), trimethylolpropane (boiling point: 295°C), 2-pyrrolidone (boiling point: 245°C), tripropylene glycol monomethyl ether (boiling point: 243°C), and triethylene glycol monomethyl ether (boiling point: 248°C).

Particles

The ink according to the present disclosure contains at least one species of particles including a polymer P and a polymerizable monomer M (hereafter, also referred to as "specified particles").

In the ink according to the present disclosure, the feature in which the polymer P and the polymerizable monomer M are included in the specified particles contributes to the preservation stability of the ink.

The ink according to the present disclosure preferably has the following form: in the ink to be applied onto the substrate, the polymerizable monomer M remains in the specified particles and, in the ink having been applied onto the substrate, the polymerizable monomer M seeps out from the specified particles.

Polymer P

The specified particles include at least one species of the polymer P.

The polymer P, in the ink to be applied to the substrate, has the role of keeping the polymerizable monomer M within the specified particles, to thereby contribute to improvement in the preservation stability of the ink.

The polymer P includes a chain polymer and may contain a crosslinked polymer.

In the present disclosure, the chain polymer means a polymer not having a crosslinked structure, and the crosslinked polymer means a polymer having a crosslinked structure.

The chain polymer may have a ring structure or may have a branched structure.

For the specified particles including the polymer P being a chain polymer, for example, reference can be made to JP6584677B.

When the polymer P is a crosslinked polymer, a preferred example of the specified particles is microcapsules including a shell formed of the polymer P being a crosslinked polymer and a core including a polymerizable monomer.

For the specified particles including the polymer P being a crosslinked polymer, for example, reference can be made to JP6510681B.

Weight-average molecular weight (Mw)

The polymer P has a weight-average molecular weight (Mw) of preferably 3000 to 200000, more preferably 4000 to 150000, still more preferably 5000 to 100000, yet more preferably 8000 to 80000, still yet more preferably 10000 to 50000.

When the polymer P has a Mw of 3000 or more, the preservation stability of the ink is further improved. The reason for this is inferred as follows: when the polymer P has a Mw of 3000 or more, in the ink to be applied to the substrate, the function of the polymer P (the function of keeping the polymerizable monomer M within the specified particles; in other words, the function of suppressing seepage of the polymerizable monomer M from the specified particles) is more effectively exerted.

When the polymer P has a Mw of 200000 or less, the blocking resistance of the image is further improved. The

reason for this is inferred as follows: when the polymer P has a Mw of 200000 or less, degradation of the fluidity during drying of the ink having been applied to the substrate (namely, thickening) is suppressed, which, as a result, further promotes evaporation of the liquid components from the ink (specifically, water and the water-soluble organic solvent).

In the present disclosure, the number-average molecular weight (Mn) and the weight-average molecular weight (Mw) mean polystyrene-equivalent values calculated by gel permeation chromatography (GPC).

As the columns employed, for example, TSKgel (registered trademark) SuperHZM-H, TSKgel (registered trademark) SuperHZ4000, and TSKgel (registered trademark) SuperHZ200 (all are manufactured by Tosoh Corporation) are employed.

Glass transition temperature (Tg)

The polymer P is not particularly limited in terms of glass transition temperature (Tg).

From the viewpoint of improving the mobility of the polymer P and further improving the image quality of the image (specifically, suppressing the granularity of the image), the polymer P has a Tg of preferably 120°C or less, more preferably 100°C or less, still more preferably 80°C or less, yet more preferably 70°C or less.

On the other hand, the polymer P has a Tg of preferably 0°C or more, more preferably 10°C or more, still more preferably 20°C or more, yet more preferably 30°C or more.

In the present disclosure, the glass transition temperature (Tg) of the polymer means a value measured by differential scanning calorimetry (DSC).

Specifically, the glass transition temperature is measured in accordance with a method described in JIS K 7121 (1987) or JIS K 6240 (2011).

In the present disclosure, the glass transition temperature is the extrapolated glass transition onset temperature (hereafter, also referred to as Tig).

More specifically, the method of measuring the glass transition temperature will be described.

In the case of determining the glass transition temperature, the apparatus is held at a temperature about 50°C lower than the estimated glass transition temperature of the resin until it becomes stable; subsequently, heating is performed at a heating rate of 20°C/min to a temperature about 30°C higher than the glass transition end temperature, and a differential thermal analysis (DTA) curve or a DSC curve is created.

The extrapolated glass transition onset temperature (Tig), which is the glass transition temperature in the present disclosure, is determined as the temperature at the point of intersection between a straight line extended from the baseline from the lower-temperature side to the higher-temperature side in the DTA curve or the DSC curve, and a tangent drawn at the maximum gradient of the curve in the stepped change region of glass transition.

When the ink includes two or more polymers P, the glass transition temperature (Tg) of the polymer P means the weighted mean value of the glass transition temperatures of the polymers P.

Examples of the polymer P include urethane polymers, urethane-urea polymers, urea polymers, acrylic polymers, polyesters, polyolefins, polystyrenes, polycarbonates, and polyamides.

The urethane polymers mean polymers including a urethane bond and not including a urea bond; the urea polymers mean polymers including a urea bond and not including a urethane bond; the urethane-urea polymers mean polymers including a urethane bond and a urea bond.

The acrylic polymers mean polymers (homopolymers or copolymers) of a raw material monomer including at least one selected from the group consisting of acrylic acid, acrylic acid derivatives (for example, acrylates), methacrylic acid, and methacrylic acid derivatives (for example, methacrylates).

Bond U

The polymer P preferably includes a bond U, which is at least one of a urethane bond or a urea bond. Stated another way, the polymer P is preferably a urethane polymer, a urethane-urea polymer, or a urea polymer.

When the polymer P includes the bond U, in the ink having landed to the substrate, the interaction between bonds U (for example, hydrogen bonds) tend to cause the interaction between specified particles. Thus, the polymerizable monomer M having seeped out from the specified particles polymerizes, which facilitates bonding between specified particles. This facilitates curing between specified particles, so that the rubfastness of the image is further improved.

The bond U preferably includes a urethane bond.

Stated another way, the polymer P preferably includes a urethane bond but does not include a urea bond, or preferably includes a urethane bond and a urea bond.

Hydrophilic group

The polymer P preferably includes at least one species of a hydrophilic group.

This contributes to the dispersion stability of the specified particles in the ink, which results in further improvement in the ink preservation stability.

From the viewpoint of further improving the ink preservation stability, the hydrophilic group is preferably an anionic group or a nonionic group, more preferably an anionic group.

For example, of an anionic group and a nonionic group that have the same molecular weight, the anionic group provides a stronger effect of improving the ink preservation stability. Thus, the anionic group (particularly preferably at least one species selected from the group consisting of a carboxy group and salts of a carboxy group) can, even in the case of having a low molecular weight, provide sufficiently the effect of improving the ink preservation stability.

The nonionic group may be a group having a polyether structure, and is preferably a monovalent group including a polyalkyleneoxy group.

The anionic group may be neutralized or may not be neutralized.

Examples of the unneutralized anionic group include a carboxy group, a sulfo group, a sulfuric acid group, a phosphonic acid group, and a phosphoric acid group.

The neutralized anionic group means an anionic group in the form of "salt" (for example, a salt of a carboxy group (for example, -COONa)). Examples of the neutralized anionic group include salts of a carboxy group, salts of a sulfo group, salts of a sulfuric acid group, salts of a phosphonic acid group, and salts of a phosphoric acid group.

The neutralization can be performed with, for example, an alkali metal hydroxide (for example, sodium hydroxide or potassium hydroxide) or an organic amine (for example, triethylamine).

The hydrophilic group in the polymer P is, from the viewpoint of further improving the ink preservation stability,

preferably an anionic group,
more preferably at least one species selected from the group consisting of a carboxy group, salts of a carboxy group, a sulfo group, salts of a sulfo group, a sulfuric acid group, salts of a sulfuric acid group, a phosphonic acid group, salts of a phosphonic acid group, a phosphoric acid group, and salts of a phosphoric acid group,
still more preferably at least one species selected from the group consisting of a carboxy group, salts of a carboxy group, a sulfo group, and salts of a sulfo group.

In the above-described salts of a carboxy group, salts of a sulfo group, salts of a sulfuric acid group, salts of a phosphonic acid group, and salts of a phosphoric acid group, "salts" are preferably alkali metal salts or organic amine salts, more preferably alkali metal salts.

In the alkali metal salts, the alkali metal is preferably K or Na.

When the polymer P includes, as the hydrophilic group, an anionic group (for example, at least one species selected from the group consisting of a carboxy group and salts of a carboxy group), and the total number of millimoles of the anionic group (for example, a carboxy group or a salt of a carboxy group) included in 1 g of the polymer P is defined as the acid value of the polymer P, the acid value of the polymer P is, from the viewpoint of dispersion stability, preferably 0.10 mmol/g to 2.00 mmol/g, more preferably 0.30 mmol/g to 1.50 mmol/g.

When the polymer P has, as the hydrophilic group, an anionic group, the degree of neutralization of the anionic group in the polymer P is preferably 50% to 100%, more preferably 70% to 90%.

The degree of neutralization used herein refers to, in the polymer P, the ratio of "the number of neutralized anionic groups" to "the total of the number of unneutralized anionic groups (for example, carboxy groups) and the number of neutralized anionic groups (for example, a salt of carboxy groups)" (specifically, ratio [the number of neutralized anionic groups/(the number of unneutralized anionic groups + the number of neutralized anionic groups)]).

The degree of neutralization of anionic groups in the polymer P can be measured by neutralization titration.

Polymerizable group

The specified particles include, in addition to the polymer P, the polymerizable monomer M described later (specifically, a compound including a polymerizable group). The polymerizable monomer M contributes to improvement in the rubfastness of the film. Thus, the polymer P does not necessarily include a polymerizable group.

However, from the viewpoint of further improving the rubfastness of the film, the polymer P may include a polymerizable group.

The polymerizable group that can be included in the polymer P is preferably a photopolymerizable group or a thermal-polymerizable group.

The photopolymerizable group is preferably a radical-polymerizable group, more preferably a group including an ethylenically double bond, still more preferably a (meth)acryloyl group, an allyl group, a styryl group, or a vinyl group. The radical-polymerizable group is, from the viewpoint of radical polymerization reactivity and the hardness of a film to be formed, particularly preferably a (meth)acryloyl group.

The thermal-polymerizable group is preferably an epoxy group, an oxetanyl group, an aziridinyl group, an

azetidinyl group, a ketone group, an aldehyde group, or a blocked isocyanate group.

The polymer P may contain a single species of a polymerizable group alone, or may contain two or more species of polymerizable groups.

The fact that the polymer P includes such a polymerizable group can be confirmed by, for example, Fourier transform infrared spectroscopy (FT-IR) analysis.

When the number of millimoles of ethylenically double bonds in 1 g of the polymer P is defined as the C=C value of the polymer P, the C=C value of the polymer P is, from the viewpoint of further improving the hardness of the image, preferably 0.05 mmol or more, more preferably 0.10 mmol/g or more, still more preferably 0.30 mmol/g or more, particularly preferably 0.50 mmol/g or more.

The C=C value of the polymer P is, from the viewpoint of further improving the water resistance and alcohol resistance of the image, preferably 0.05 mmol or more, more preferably 0.10 mmol/g or more, still more preferably 0.30 mmol/g or more, yet more preferably 0.50 mmol/g or more, still yet more preferably 0.60 mmol/g or more, particularly preferably 0.70 mmol/g or more.

On the other hand, from the viewpoint of improving the temporal curability of the ink (specifically, suppressing degradation of the curability of the ink over time), the C=C value of the polymer P is preferably 4.00 mmol/g or less, more preferably 3.00 mmol/g or less, still more preferably 2.00 mmol/g or less, particularly preferably 1.50 mmol/g or less.

The polymer P may include another structure other than the above-described structures (specifically, the bond U, the hydrophilic group, and the polymerizable group).

Examples of the other structure include polysiloxane bonds (specifically, divalent polysiloxane groups), monovalent polysiloxane groups, monovalent fluorinated hydrocarbon groups, and divalent fluorinated hydrocarbon groups.

Preferred structure of polymer P

The polymer P preferably includes a structural unit derived from an isocyanate compound (hereafter, also referred to as "NCO"), and a structural unit derived from a compound including an active hydrogen group.

The polymer P of the preferred example includes a bond U formed by a reaction between an isocyanate group of an isocyanate compound and an active hydrogen group in a compound including an active hydrogen group.

The active hydrogen group is preferably a hydroxy group, a primary amino group, or a secondary amino group.

For example, a reaction between an isocyanate group and a hydroxy group forms a urethane group.

Alternatively, a reaction between an isocyanate group and a primary amino group or a secondary amino group forms a urea group.

Hereafter, the isocyanate compound and the compound including an active hydrogen group that serve as raw materials for the polymer P having the preferred structure may be referred to as raw material compounds.

As such a raw material compound, the isocyanate compound may be a single compound alone or may be two or more compounds.

As such a raw material compound, the compound including an active hydrogen group may be a single compound alone or may be two or more compounds.

At least one isocyanate compound serving as a raw material compound is preferably a bi- or higher functional isocyanate compound.

At least one compound including an active hydrogen group and serving as a raw material compound is preferably a compound including two or more active hydrogen groups.

Of the raw material compounds, at least one of the isocyanate compound or the compound including an active hydrogen group preferably includes a hydrophilic group. This facilitates production of the polymer P including a hydrophilic group. In this case, in the finally obtained polymer P, at least some groups of the hydrophilic groups may be provided by neutralization of hydrophilic groups of a raw material compound.

**In** a more preferred example, of the raw material compounds, at least one compound including an active hydrogen group is a compound including an active hydrogen group and a hydrophilic group.

When the polymer P includes a polymerizable group, of the raw material compounds, at least one of the isocyanate compound or the compound including an active hydrogen group preferably includes a polymerizable group. This facilitates production of the polymer P including a polymerizable group.

**In** a more preferred example, of the raw material compounds, at least one compound including an active hydrogen group is a compound including an active hydrogen group and a polymerizable group.

As described above, the polymer P includes a chain polymer and may contain a crosslinked polymer.

The chain polymer serving as the polymer P can be produced by causing a reaction between a bifunctional isocyanate compound and a compound including two active hydrogen groups.

The crosslinked polymer serving as the polymer P can be produced by causing a reaction between a tri- or higher functional isocyanate compound and a compound including two or more active hydrogen groups.

The crosslinked polymer serving as the polymer P can also be produced by causing a reaction between a

bifunctional isocyanate compound and a compound including three or more active hydrogen groups.

Hereinafter, preferred raw material compounds will be described.

Isocyanate compound

The isocyanate compound is preferably a bi- or higher functional isocyanate compound, more preferably a bifunctional to hexafunctional isocyanate compound.

In the case of using, as a raw material compound, a bifunctional isocyanate compound, the polymer P preferably includes a structural unit derived from the bifunctional isocyanate compound, the following structural unit (P1).

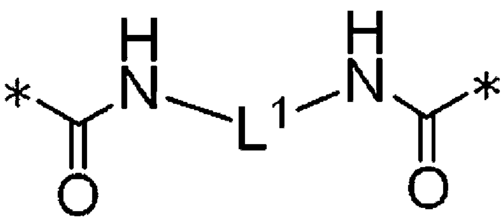

(P1)

In the structural unit (P1), $L^1$ represents a divalent organic group having 1 to 20 carbon atoms, and * represent bonding sites.

Specific examples of $L^1$ include residues provided by removing two isocyanate groups (NCO groups) from the following specific examples of the bifunctional isocyanate compound.

Specific examples of the bifunctional isocyanate compound are as follows. However, the bifunctional isocyanate compound is not limited to the following specific examples.

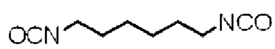

HDI

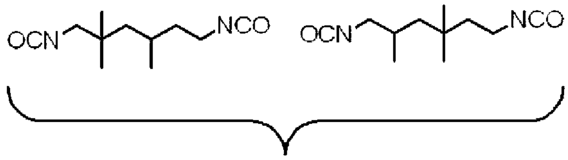

TMHDI

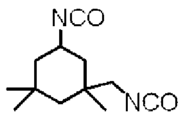

IPDI

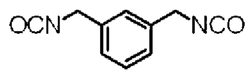

XDI

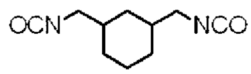

HXDI

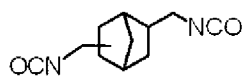

NBDI

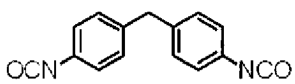

MDI

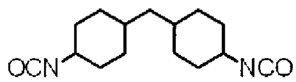

HMDI

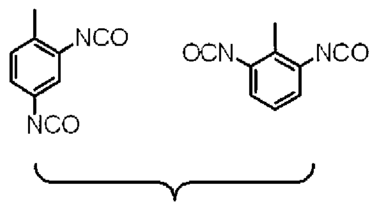

TDI

As the bifunctional isocyanate compound, bifunctional isocyanate compounds derived from the above-described specific examples are also usable. Examples include DURANATE (registered trademark) D101, D201, and A101 (manufactured by Asahi Kasei Corporation).

The tri- or higher functional isocyanate compound is preferably a reaction product of at least one selected from the group consisting of bifunctional isocyanate compounds and at least one selected from the group consisting of compounds including three or more active hydrogen groups (for example, tri- or higher functional polyol compounds, tri- or

higher functional polyamine compounds, and tri- or higher functional polythiol compounds).

The number of moles (number of molecules) of the bifunctional isocyanate compound caused to react with the compound including three or more active hydrogen groups is preferably 0.6 times or more, more preferably 0.6 times to 5 times, still more preferably 0.6 times to 3 times, yet more preferably 0.8 times to 2 times the number of moles of active hydrogen groups (the number of equivalents of active hydrogen groups) of the compound including three or more active hydrogen groups.

Examples of the bifunctional isocyanate compound for forming the tri- or higher functional isocyanate compound include the bifunctional isocyanate compounds described above as specific examples.

Examples of the compound including three or more active hydrogen groups for forming the tri- or higher functional isocyanate compound include compounds described in Paragraphs 0057 to 0058 in WO2016/052053A.

Examples of the tri- or higher functional isocyanate compound include adduct-type tri- or higher functional isocyanate compounds, isocyanurate-type tri- or higher functional isocyanate compounds, and biuret-type tri- or higher functional isocyanate compounds.

Examples of the commercially available products of the adduct-type tri- or higher functional isocyanate compounds include TAKENATE (registered trademark) D-102, D-103, D-103H, D-103M2, P49-75S, D-110N, D-120N, D-140N, D-160N (all from Mitsui Chemicals, Inc.), DESMODUR (registered trademark) L75, UL57SP (Sumika Bayer Urethane Co., Ltd.), CORONATE (registered trademark) HL, L (Tosoh Corporation), and P301-75E (Asahi Kasei Corporation).

Examples of the commercially available products of the isocyanurate-type tri- or higher functional isocyanate compounds include TAKENATE (registered trademark) D-127N, D-170N, D-170HN, D-172N, D-177N (all from Mitsui Chemicals, Inc.), SUMIDUR N3300, DESMODUR (registered trademark) N3600, N3900, Z4470BA (all from Sumika Bayer Urethane Co., Ltd.), CORONATE (registered trademark) HX, HK (all from Nippon Urethane Polymer Co., Ltd.), and DURANATE (registered trademark) TPA-100, TKA-100, TSA-100, TSS-100, TLA-100, and TSE-100 (all from Asahi Kasei Corporation).

Examples of the commercially available products of the biuret-type tri- or higher functional isocyanate compounds include TAKENATE (registered trademark) D-165N, NP1100 (all from Mitsui Chemicals, Inc.), DESMODUR (registered trademark) N3200 (Sumika Bayer Urethane Co., Ltd.), and DURANATE (registered trademark) 24A-100 (Asahi Kasei Corporation).

At least one isocyanate compound serving as a raw material compound may be an isocyanate compound including a hydrophilic group. For the isocyanate compound including a hydrophilic group, reference can be made to Paragraphs 0112 to 0118 and Paragraphs 0252 to 0254 of WO2016/052053A.

At least one isocyanate compound serving as a raw material compound may be an isocyanate compound including a polymerizable group. For the isocyanate compound including a polymerizable group, reference can be made to Paragraphs 0084 to 0089, 0203, and 0205 of WO2016/052053A.

Compound including active hydrogen group

The compound including an active hydrogen group is preferably a compound including two or more active hydrogen groups.

The compound including two or more active hydrogen groups is more preferably a polyol compound (specifically, a compound having two or more hydroxy groups) or a polyamine compound (specifically, a compound having two or more amino groups).

In the case of using, as a raw material compound, the compound including an active hydrogen group and a hydrophilic group, the polymer P preferably includes at least one species of the following structural unit (P0).

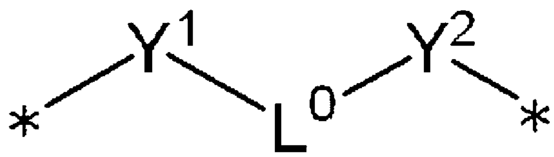

(P0)

In the structural unit (P0),

$L^0$ represents a divalent organic group,

$Y^1$ and $Y^2$ each independently represent an oxygen atom, a sulfur atom, or a $-NR^1-$ group,
$R^1$ represents a hydrogen atom or a hydrocarbon group having 1 to 10 carbon atoms, and
* represent bonding sites.

In the structural unit (P0), the divalent organic group represented by $L^0$ may be a group composed of carbon atoms and hydrogen atoms, or may be a group including carbon atoms and hydrogen atoms and further including a heteroatom (for example, an oxygen atom, a nitrogen atom, or a sulfur atom).

The divalent organic group represented by $L^0$ may include at least one of a hydrophilic group or a polymerizable group.

Specific examples of $L^0$ include residues provided by removing two active hydrogen groups from specific examples of the compound including two or more active hydrogen groups described later.

$R^1$ is preferably a hydrogen atom or a hydrocarbon group having 1 to 6 carbon atoms, more preferably a hydrogen atom or a hydrocarbon group having 1 to 3 carbon atoms.

$Y^1$ and $Y^2$ are each independently preferably an oxygen atom or a $-NR^1-$ group, more preferably an oxygen atom.

The following are specific examples of diol compounds serving as compounds including an active hydrogen group; however, the compound including an active hydrogen group is not limited to the following specific examples.

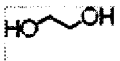
(1)

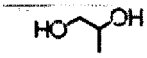
(2)

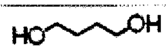
(3)

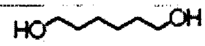
(4)

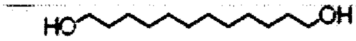
(5)

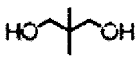
(6)

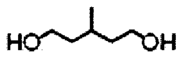
(7)

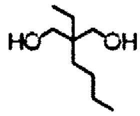
(8)

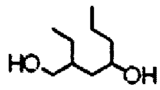
(9)

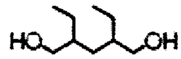
(10)

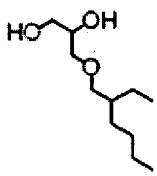
(11)

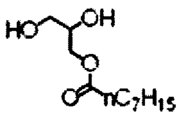
(12)

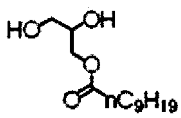
(13)

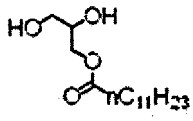
(14)

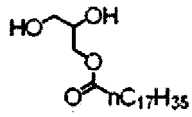
(15)

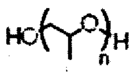
(16)
PPG

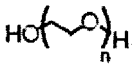
(16-2)
PEG

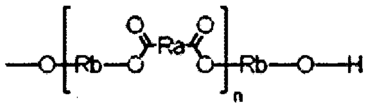
(17)
PEs

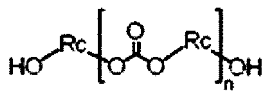
(18)
PC

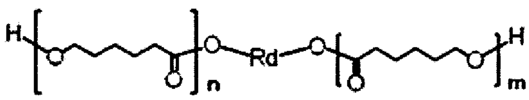
(19)
PCL

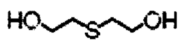
(20)

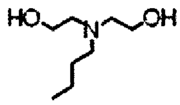
(21)

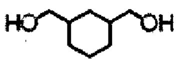
(22)

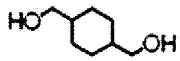
(23)

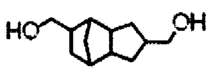
(24)

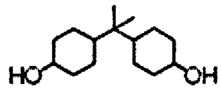
(25)

In Compounds (12) to (15), $nC_7H_{15}$, $nC_9H_{19}$, $nC_{11}H_{23}$, and $nC_{17}H_{35}$ respectively represent a normal heptyl group, a normal nonyl group, a normal undecyl group, and a normal heptadecyl group.

Compound (16) PPG is a polypropylene glycol where n is the repeat number.

Compound (16-2) PEG is a polyethylene glycol where n is the repeat number.

Compound (17) PEs is a polyester diol where n is the repeat number, and Ra and two Rb's are each independently a divalent hydrocarbon group having 2 to 25 carbon atoms. In Compound (17) PEs, n Ra's may be the same or different. In Compound (17) PEs, (n + 1) Rb's may be the same or different.

Compound (18) PC is a polycarbonatediol where n is the repeat number, and (n + 1) Rc's are each independently an alkylene group having 2 to 12 (preferably 3 to 8, more preferably 3 to 6) carbon atoms. In Compound (18) PC, (n + 1) Rc's may be the same or different.

Compound (19) PCL is a polycaprolactonediol where n and m are the repeat numbers, and Rd is an alkylene group having 2 to 25 carbon atoms.

Compound including active hydrogen group and polymerizable group

The compound including an active hydrogen group may also be a compound including an active hydrogen group

and a polymerizable group.

The compound including an active hydrogen group and a polymerizable group is suitable as a compound for introducing a polymerizable group into the polymer P (hereafter, also referred to as "polymerizable-group-introducing compound").

The following are specific examples of diol compounds serving as compounds including an active hydrogen group and a polymerizable group; however, the compound including an active hydrogen group and a polymerizable group is not limited to the following specific examples.

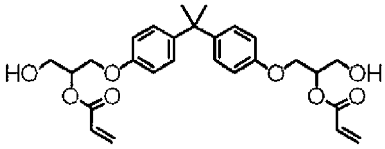
(26)

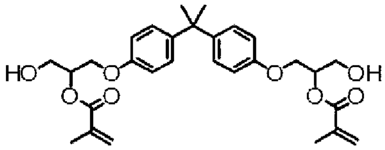
(27)

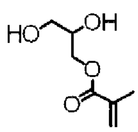
(28)

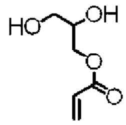
(29)

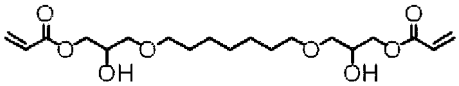
(30)

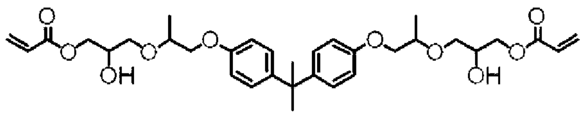
(31)
DA 250

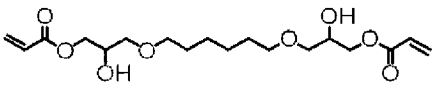
(32)

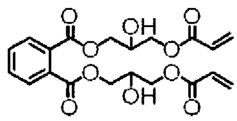
(33)
DA 721

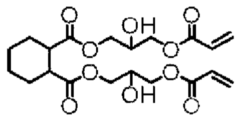
(34)
DA 722

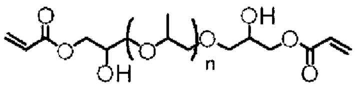
(35) n=1
DA 911M

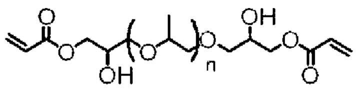
(36) n=3
DA-920

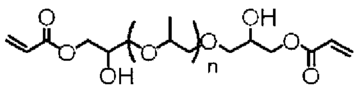
(37) n=11
DA 931

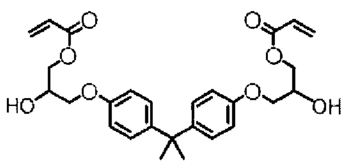
(38)

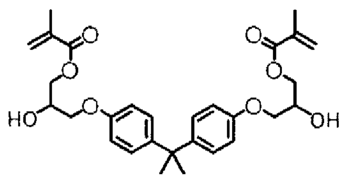
(39)

For the compound including an active hydrogen group and a polymerizable group, reference may be appropriately made to the descriptions of Paragraphs 0075 to 0089 of WO2016/052053A.

Compound including active hydrogen group and hydrophilic group

The compound including an active hydrogen group may also be a compound including an active hydrogen group and a hydrophilic group.

The compound including an active hydrogen group and a hydrophilic group is suitable as a compound for introducing a hydrophilic group into the polymer P (hereafter, also referred to as "hydrophilic-group-introducing compound").

In the case of using, as a raw material compound, the compound including an active hydrogen group and a hydrophilic group, the polymer P preferably includes the following structural unit (P2).

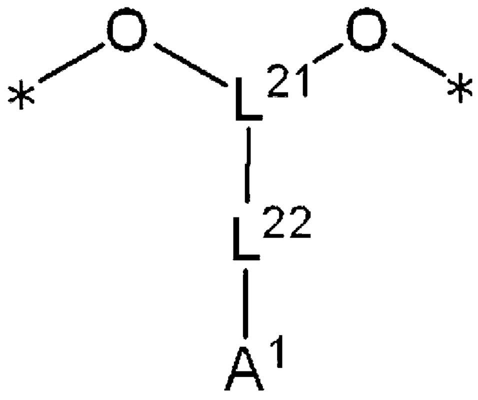

(P2)

In the structural unit (P2),

$L^{21}$ represents a trivalent organic group having 1 to 20 carbon atoms,
$L^{22}$ represents a single bond or a divalent organic group having 1 to 20 carbon atoms,
$A^1$ represents a carboxy group, a salt of a carboxy group, a sulfo group, or a salt of a sulfo group, and
* represent bonding sites.

In the trivalent organic group having 1 to 20 carbon atoms represented by $L^{21}$, the number of carbon atoms is preferably 2 to 20, more preferably 3 to 20, still more preferably 4 to 20.
The trivalent organic group represented by $L^{21}$ is preferably a trivalent hydrocarbon group or a group in which at least one carbon atom in a trivalent hydrocarbon group is replaced by a heteroatom (preferably an oxygen atom, a sulfur atom, or a nitrogen atom).
In the divalent organic group having 1 to 20 carbon atoms represented by $L^{22}$, the number of carbon atoms is preferably 1 to 10, more preferably 1 to 6.
The divalent organic group represented by $L^{22}$ is preferably a divalent hydrocarbon group (preferably an alkylene group) or a group in which at least one carbon atom in a divalent hydrocarbon group (preferably an alkylene group) is replaced by an oxygen atom or a sulfur atom (preferably an oxygen atom).
$L^{22}$ may be a single bond.
The following are specific examples of the compound including an active hydrogen group and a hydrophilic group; however, the compound including an active hydrogen group and a hydrophilic group is not limited to the following specific examples. In the following specific examples, the carboxy groups and the sulfo group may be neutralized (specifically, may be salts of carboxy groups and a salt of a sulfo group).

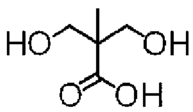

DMPA

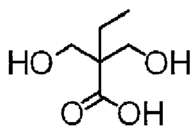

DMBA

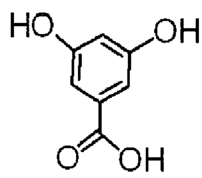

DHBA

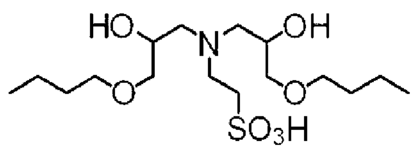

DSO

For the compound including an active hydrogen group and a hydrophilic group, reference can be appropriately made to the descriptions of Paragraphs 0112 to 0118 and Paragraphs 0252 to 0254 of WO2016/052053A.
The polymer P content relative to the total solid content of the specified particles is preferably 10 mass% to 90 mass%, more preferably 20 mass% to 80 mass%, still more preferably 30 mass% to 70 mass%, yet more preferably 40 mass% to 60 mass%.
In the present disclosure, the total solid content of the specified particles means the total amount of the specified particles except for the solvent (specifically, water and the organic solvent). When the specified particles do not include solvents, the total solid content of the specified particles is the same as the total amount of the specified particles.
The polymer P content relative to the total ink amount is preferably 0.3 mass% to 20 mass%, more preferably 0.5

mass% to 15 mass%, still more preferably 1 mass% to 10 mass%. Polymerizable monomer M

The specified particles include at least one species of the polymerizable monomer M.

The polymerizable monomer M, during curing of the ink having been applied onto the substrate, bond together the specified particles to contribute to improvement in the rubfastness of the image.

The specified particles may include a single species of the polymerizable monomer M alone or two or more species of the polymerizable monomer M.

As the polymerizable monomer M included in the specified particles, the compounds described in Paragraphs 0097 to 0105 in WO2016/052053A may be used.

The polymerizable monomer M has a molecular weight of preferably 100 to 4000, still more preferably 100 to 2000, yet more preferably 100 to 1000, still yet more preferably 100 to 900, even yet more preferably 100 to 800, particularly preferably 150 to 750.

The polymerizable monomer M that can be included in the specified particles is preferably a photopolymerizable monomer, more preferably a radical-polymerizable monomer.

The radical-polymerizable monomer has a radical-polymerizable group in the molecular structure.

Preferred examples of the radical-polymerizable group of the radical-polymerizable monomer are the same as the above-described preferred examples of the radical-polymerizable group that the polymer P can include.

Examples of the radical-polymerizable monomer include acrylate compounds, methacrylate compounds, styrene compounds, vinylnaphthalene compounds, N-vinyl heterocyclic compounds, unsaturated polyesters, unsaturated polyethers, unsaturated polyamides, and unsaturated urethanes.

The radical-polymerizable monomer is preferably a compound having an ethylenically unsaturated group.

When the specified particles include the radical-polymerizable monomer, the specified particles may include a single species of a radical-polymerizable monomer alone, or may include two or more species of radical-polymerizable monomers.

Examples of the acrylate compounds include monofunctional acrylate compounds such as 2-hydroxyethyl acrylate, butoxyethyl acrylate, carbitol acrylate, cyclohexyl acrylate, tetrahydrofurfuryl acrylate, benzyl acrylate, tridecyl acrylate, 2-phenoxyethyl acrylate (PEA), bis(4-acryloxypolyethoxyphenyl)propane, oligoester acrylate, epoxy acrylate, isobornyl acrylate (IBOA), dicyclopentenyl acrylate, dicyclopentenyloxyethyl acrylate, dicyclopentanyl acrylate, cyclic trimethylolpropane formal acrylate, 2-(2-ethoxyethoxy)ethyl acrylate, 2-(2-vinyloxyethoxy)ethyl acrylate, octyl acrylate, decyl acrylate, isodecyl acrylate, lauryl acrylate, 3,3,5-trimethylcyclohexyl acrylate, 4-t-butylcyclohexyl acrylate, isoamyl acrylate, stearyl acrylate, isostearyl acrylate, 2-ethylhexyl diglycol acrylate, 2-hydroxybutyl acrylate, 2-acryloyloxyethyl hydrophthalate, ethoxydiethylene glycol acrylate, methoxydiethylene glycol acrylate, methoxypolyethylene glycol acrylate, methoxypropylene glycol acrylate, 2-hydroxy-3-phenoxypropyl acrylate, vinyl ether acrylate, 2-acryloyloxyethyl succinate, 2-acryloyloxy phthalate, 2-acryloxyethyl-2-hydroxyethyl phthalate, lactone-modified acrylate, acryloylmorpholine, acrylamide, and substituted acrylamides (for example, N-methylolacrylamide and diacetoneacrylamide);

bifunctional acrylate compounds such as polyethylene glycol diacrylate, polypropylene glycol diacrylate, polytetramethylene glycol diacrylate, 1,3-butylene glycol diacrylate, 1,4-butanediol diacrylate, 1,6-hexanediol diacrylate (HDDA), 1,9-nonanediol diacrylate (NDDA), 1,10-decanediol diacrylate (DDDA), 3-methylpentanediol diacrylate (3MPDDA), neopentyl glycol diacrylate, tricyclodecanedimethanol diacrylate, bisphenol A ethylene oxide (EO) adduct diacrylate, bisphenol A propylene oxide (PO) adduct diacrylate, ethoxylated bisphenol A diacrylate, hydroxyneopentyl glycol diacrylate, propoxylated neopentyl glycol diacrylate, alkoxylated dimethyloltricyclodecane diacrylate, polytetramethylene glycol diacrylate, alkoxylated cyclohexanonedimethanol diacrylate, alkoxylated hexanediol diacrylate, dioxane glycol diacrylate, cyclohexanonedimethanol diacrylate, diethylene glycol diacrylate, neopentyl glycol diacrylate, tetraethylene glycol diacrylate, dipropylene glycol diacrylate, tripropylene glycol diacrylate (TPGDA), and neopentyl glycol propylene oxide adduct diacrylate; and

tri- or higher functional acrylate compounds such as trimethylolpropane triacrylate, pentaerythritol triacrylate, dipentaerythritol tetraacrylate, ethoxylated isocyanurate triacrylate, ε-caprolactone-modified tris-(2-acryloxyethyl) isocyanurate, ditrimethylolpropane tetraacrylate, dipentaerythritol pentaacrylate, dipentaerythritol hexaacrylate, ethoxylated trimethylolpropane triacrylate, propoxylated trimethylolpropane triacrylate, caprolactone-modified trimethylolpropane triacrylate, pentaerythritol tetraacrylate, pentaerythritolethoxy tetraacrylate, glycerol propoxy triacrylate, ethoxylated dipentaerythritol hexaacrylate, caprolactam-modified dipentaerythritol hexaacrylate, propoxylated glycerol triacrylate, ethoxylated trimethylolpropane triacrylate, and propoxylated trimethylolpropane triacrylate.

Examples of the methacrylate compounds include monofunctional methacrylate compounds such as methyl methacrylate, n-butyl methacrylate, allyl methacrylate, glycidyl methacrylate, benzyl methacrylate, dimethylaminomethyl methacrylate, methoxypolyethylene glycol methacrylate, methoxytriethylene glycol methacrylate, hydroxyethyl methacrylate, phenoxyethyl methacrylate, and cyclohexyl methacrylate; and

bifunctional methacrylate compounds such as polyethylene glycol dimethacrylate, polypropylene glycol dimethacrylate, 2,2-bis(4-methacryloxypolyethoxyphenyl)propane, and tetraethylene glycol dimethacrylate.

Examples of the styrene compounds include styrene, p-methylstyrene, p-methoxystyrene, β-methylstyrene, p-methyl-β-methylstyrene, α-methylstyrene, and p-methoxy-β-methylstyrene.

Examples of the vinylnaphthalene compounds include 1-vinylnaphthalene, methyl-1-vinylnaphthalene, β-methyl-1-vinylnaphthalene, 4-methyl-1-vinylnaphthalene, and 4-methoxy-1-vinylnaphthalene.

Examples of the N-vinylheterocyclic compounds include N-vinylcarbazole, N-vinylpyrrolidone, N-vinylethylacetamide, N-vinylpyrrole, N-vinylphenothiazine, N-vinylacetanilide, N-vinylethylacetamide, N-vinylsuccinimide, N-vinylphthalimide, N-vinylcaprolactam, and N-vinylimidazole.

Other examples of the radical-polymerizable monomer include allyl glycidyl ether, diallyl phthalate, triallyl trimellitate, and N-vinylamides such as N-vinylformamide.

Of these radical-polymerizable monomers, a preferred bi- or lower functional radical-polymerizable monomer is at least one selected from the group consisting of 1,6-hexanediol diacrylate (HDDA), 1,9-nonanediol diacrylate (NDDA), 1,10-decanediol diacrylate (DDDA), 3-methylpentanediol diacrylate (3MPDDA), neopentyl glycol diacrylate, tricyclodecanedimethanol diacrylate, diethylene glycol diacrylate, tetraethylene glycol diacrylate, dipropylene glycol diacrylate, tripropylene glycol diacrylate (TPGDA), cyclohexanonedimethanol diacrylate, alkoxylated hexanediol diacrylate, polyethylene glycol diacrylate, and polypropylene glycol diacrylate.

The tri- or higher functional radical-polymerizable monomer is preferably at least one selected from the group consisting of trimethylolpropane triacrylate, pentaerythritol triacrylate, dipentaerythritol tetraacrylate, ditrimethylolpropane tetraacrylate, dipentaerythritol pentaacrylate, dipentaerythritol hexaacrylate, ethoxylated trimethylolpropane triacrylate, propoxylated trimethylolpropane triacrylate, caprolactone-modified trimethylolpropane triacrylate, pentaerythritol tetraacrylate, pentaerythritolethoxy tetraacrylate, glycerol propoxy triacrylate, ethoxylated dipentaerythritol hexaacrylate, caprolactam-modified dipentaerythritol hexaacrylate, propoxylated glycerol triacrylate, ethoxylated trimethylolpropane triacrylate, and propoxylated trimethylolpropane triacrylate.

The specified particles may include a combination of a bi- or lower functional radical-polymerizable monomer and a tri- or higher functional radical-polymerizable monomer. In this case, the bi- or lower functional radical-polymerizable monomer mainly further improves the adhesiveness between the film and the substrate, and the tri- or higher functional radical-polymerizable monomer mainly further improves the hardness of the film.

Examples of the combination of a bi- or lower functional radical-polymerizable monomer and a tri- or higher functional radical-polymerizable monomer include a combination of a bifunctional acrylate compound and a trifunctional acrylate compound, a combination of a bifunctional acrylate compound and a pentafunctional acrylate compound, and a combination of a monofunctional acrylate compound and a tetrafunctional acrylate compound.

From the viewpoint of further improving the adhesiveness between the film and the substrate, at least one species of a radical-polymerizable monomer that can be included in the specified particles is preferably a radical-polymerizable monomer having a ring structure (hereafter, also referred to as "cyclic radical-polymerizable monomer").

Examples of the cyclic radical-polymerizable monomer include cyclohexyl acrylate, tetrahydrofurfuryl acrylate, benzyl acrylate, isobornyl acrylate, dicyclopentenyl acrylate, dicyclopentenyloxyethyl acrylate, dicyclopentanyl acrylate, ethoxylated isocyanurate triacrylate, and ε-caprolactone-modified tris-(2-acryloxyethyl) isocyanurate.

Other examples include bi- or higher functional cyclic radical-polymerizable monomers described below.

From the viewpoint of further improving the adhesiveness between the film and the substrate, at least one species of the radical-polymerizable monomer that can be included in the specified particles is preferably a polymerizable monomer including, in a single molecule, one or more ring structures and two or more (meth)acryloyl groups (hereafter, also referred to as "bi- or higher functional cyclic radical-polymerizable monomer").

Examples of the bi- or higher functional cyclic radical-polymerizable monomer include tricyclodecanedimethanol di(meth)acrylate,

bisphenol A ethylene oxide (EO) adduct di(meth)acrylate,
bisphenol A propylene oxide (PO) adduct di(meth)acrylate,
ethoxylated bisphenol A di(meth)acrylate,
alkoxylated dimethyloltricyclodecane di(meth)acrylate,
alkoxylated cyclohexanonedimethanol di(meth)acrylate, and
cyclohexanonedimethanol di(meth)acrylate.

When the specified particles include a radical-polymerizable monomer, the content of the bi- or higher functional cyclic radical-polymerizable monomer relative to the total amount of the radical-polymerizable monomer is preferably 10 mass% to 100 mass%, more preferably 30 mass% to 100 mass%, particularly preferably 40 mass% to 100 mass%.

In addition to the above-described radical-polymerizable monomers, there are other usable radical-polymerizable monomers such as commercially available products described in, for example, "Crosslinking Agent Handbook", edited by Shinzo YAMASHITA (1981, TAISEISHA LTD.); "UV/EB Curing Handbook (Raw Material)", edited by Kiyomi KATO (1985, Kobunshi Kankokai); "Applications and Markets of UV/EB Curing Techniques", edited by RadTech Japan, p. 79 (1989, CMC Publishing Co., Ltd.); and "Polyester Resin Handbook", written by Eiichiro TAKIYAMA (1988, THE NIKKAN

KOGYO SHIMBUN, LTD.); and radical-polymerizable and crosslinkable monomers publicly known in the industry.

The content of the polymerizable monomer M relative to the total solid content of the specified particles is preferably 10 mass% to 90 mass%, more preferably 20 mass% to 80 mass%, still more preferably 30 mass% to 70 mass%, yet more preferably 40 mass% to 60 mass%.

The polymerizable monomer M content relative to the total ink amount is preferably 0.3 mass% to 20 mass%, more preferably 0.5 mass% to 15 mass%, still more preferably 1 mass% to 10 mass%.

The polymerizable monomer M preferably includes a monomer (M-1) having a viscosity at 25°C of 10 mPa·s to 150 mPa·s.

When the viscosity of the monomer (M-1) is 150 mPa·s or less, on the substrate, seepage of the polymerizable monomer M (in this case, the monomer (M-1)) from the specified particles is further promoted, which results in further improvement in the rubfastness of the image.

When the viscosity of the monomer (M-1) is 10 mPa·s or more, the preservation stability of the ink is further improved.

The monomer (M-1) is a polymerizable monomer having a viscosity at 25°C of 10 mPa·s to 150 mPa·s.

As the monomer (M-1), from the radical-polymerizable monomers described above as examples, a monomer having a viscosity at 25°C of 10 mPa·s to 150 mPa·s can be appropriately selected and used.

The viscosities of polymerizable monomers are values measured using a viscometer.

As the viscometer, for example, VISCOMETER TV-22 (Toki Sangyo Co., Ltd.) can be employed.

From the viewpoint of further improving the preservation stability of the ink and the rubfastness of the image, the monomer (M-1) content relative to the total amount of the polymerizable monomer M is preferably 50 mass% or more, more preferably 60 mass% or more, still more preferably 70 mass% or more.

In the ink according to the present disclosure, the monomer (M-1) content relative to the total amount of the polymerizable monomer M may be 100 mass%, or may be less than 100 mass%.

When the polymerizable monomer M includes the monomer (M-1), the monomer (M-1) content relative to the total ink amount is preferably 0.3 mass% to 20 mass%, more preferably 0.5 mass% to 15 mass%, still more preferably 1 mass% to 10 mass%.

Other examples of the radical-polymerizable monomer serving as the polymerizable monomer M include the radical-polymerizable monomers described in patent publications such as JP1995-159983A (JP-H7-159983A), JP1995-31399B (JP-H7-31399B), JP1996-224982A (JP-H8-224982A), JP1998-863A (JP-H10-863A), JP1997-134011A (JP-H9-134011A), and JP2004-514014A.

Examples of the commercially available product of the radical-polymerizable monomer include AH-600 (bifunctional), AT-600 (bifunctional), UA-306H (hexafunctional), UA-306T (hexafunctional), UA-306I (hexafunctional), UA-510H (decafunctional), UF-8001G (bifunctional), DAUA-167 (bifunctional), LIGHT ACRYLATE NPA (bifunctional), LIGHT ACRYLATE 3EG-A (bifunctional) (all are from Kyoeisha Chemical Co., Ltd.), SR339A (PEA, monofunctional), SR506 (IBOA, monofunctional), CD262 (bifunctional), SR238 (HDDA, bifunctional), SR341 (3MPDDA, bifunctional), SR508 (bifunctional), SR306H (bifunctional), CD560 (bifunctional), SR833S (bifunctional), SR444 (trifunctional), SR454 (trifunctional), SR492 (trifunctional), SR499 (trifunctional), CD501 (trifunctional), SR502 (trifunctional), SR9020 (trifunctional), CD9021 (trifunctional), SR9035 (trifunctional), SR494 (tetrafunctional), SR399E (pentafunctional) (all are from Sartomer), A-NOD-N (NDDA, bifunctional), A-DOD-N (DDDA, bifunctional), A-200 (bifunctional), APG-400 (bifunctional), A-BPE-10 (bifunctional), A-BPE-20 (bifunctional), A-9300 (trifunctional), A-9300-1CL (trifunctional), A-TMPT (trifunctional), A-TMM-3L (trifunctional), A-TMMT (tetrafunctional), AD-TMP (tetrafunctional) (all are from Shin Nakamura Chemical Co., Ltd.), UV-7510B (trifunctional) (The Nippon Synthetic Chemical Industry Co., Ltd.), KAYARAD DPCA-30 (hexafunctional), and KAYARAD DPEA-12 (hexafunctional) (all are from Nippon Kayaku Co., Ltd.).

Other preferred examples of the radical-polymerizable monomer include commercially available products such as NPGPODA (neopentyl glycol propylene oxide adduct diacrylate), SR531, SR285, SR256 (all are from Sartomer), A-DHP (dipentaerythritol hexaacrylate, Shin Nakamura Chemical Co., Ltd.), ARONIX (registered trademark) M-156 (TOAGOSEI CO., LTD.), V-CAP (BASF), and VISCOAT #192 (OSAKA ORGANIC CHEMICAL INDUSTRY LTD.).

Radical polymerization initiator

The specified particles may include at least one radical polymerization initiator.

In the present disclosure, the radical polymerization initiator means a compound that absorbs light to generate a radical.

Note that compounds that absorb light to generate a radical and are classified also as the above-described photoacid generators are not included in the concept of the radical polymerization initiator in the present disclosure.

When the specified particles include, as the polymerizable monomer, a radical-polymerizable monomer, the specified particles preferably include at least one radical polymerization initiator.

In this case, the formed film has further improved rubfastness and further improved adhesiveness.

The reason for this is inferred that the radical-polymerizable group in the radical-polymerizable monomer and the radical polymerization initiator are positioned close to each other, which results in improvement in the curing sensitivity of the film (hereafter, also simply referred to as "sensitivity").

When the specified particles include a radical polymerization initiator, radical polymerization initiators that have high sensitivity, but have low dispersibility or low solubility in water and hence have been unsuitable (for example, radical polymerization initiators having a solubility in water at 25°C of 1.0 mass% or less) become usable. This broadens the range of choices of the radical polymerization initiator employed, which also leads to broadening of range of choices of the light source employed. This can provide higher curing sensitivity than before.

Specific examples of the above-described radical polymerization initiators that have high sensitivity, but have low dispersibility or low solubility in water and hence have been unsuitable include carbonyl compounds and acylphosphine oxide compounds described later, and preferred are acylphosphine oxide compounds.

Thus, in the aqueous dispersion and the ink according to the present disclosure, a substance having a low solubility in water can be included in the specified particles, to thereby be contained in the aqueous dispersion and the ink according to the present disclosure, which are aqueous compositions.

Such embodiments of the aqueous dispersion and the ink in which the specified particles include a radical polymerization initiator also have higher preservation stability than existing photocurable compositions. The reason for this is inferred that the radical polymerization initiator is included in the specified particles, so that aggregation or sedimentation of the radical polymerization initiator is suppressed.

For the radical polymerization initiator, for example, reference can be appropriately made to the descriptions of Paragraphs 0091 to 0094 of WO2016/052053A.

The radical polymerization initiator is more preferably (a) a carbonyl compound such as an aromatic ketone or (b) an acylphosphine oxide compound; specific examples include bis(2,4,6-trimethylbenzoyl)-phenylphosphine oxide (for example, IRGACURE (registered trademark) 819 manufactured by BASF), 2-(dimethylamino)-1-(4-morpholinophenyl)-2-benzyl-1-butanone (for example, IRGACURE (registered trademark) 369 manufactured by BASF), 2-methyl-1-(4-methylthiophenyl)-2-morpholinopropan-1-one (for example, IRGACURE (registered trademark) 907 manufactured by BASF), 1-hydroxy-cyclohexylphenyl-ketone (for example, IRGACURE (registered trademark) 184 manufactured by BASF), and 2,4,6-trimethylbenzoyl-diphenyl-phosphine oxide (for example, DAROCUR (registered trademark) TPO and LUCIRIN (registered trademark) TPO (both are manufactured by BASF)).

Of these, from the viewpoints of, for example, improving the sensitivity and suitability for LED light, the photopolymerization initiator internally included is preferably (b) the acylphosphine oxide compound, more preferably a monoacylphosphine oxide compound (particularly preferably 2,4,6-trimethylbenzoyl-diphenyl-phosphine oxide) or a bisacylphosphine oxide compound (particularly preferably bis(2,4,6-trimethylbenzoyl)-phenylphosphine oxide).

The LED light preferably has a wavelength of 355 nm, 365 nm, 385 nm, 395 nm, or 405 nm.

The form of the specified particles including a radical polymerization initiator can be produced by, for example, emulsifying a mixture provided by mixing together an oil-phase component including the polymer P (or the raw material compounds for producing the polymer P), a radical-polymerizable monomer, and a photopolymerization initiator, and an aqueous-phase component.

The content of the radical polymerization initiator relative to the total solid content of the specified particles is preferably 0.1 mass% to 15 mass%, more preferably 0.5 mass% to 10 mass%, still more preferably 1 mass% to 6 mass%.

Sensitizer

The specified particles may include at least one sensitizer.

When the specified particles include at least one photopolymerization initiator, the specified particles preferably include at least one sensitizer.

When the specified particles contain a sensitizer, decomposition of the photopolymerization initiator caused by irradiation with an actinic energy ray can be further promoted.

The sensitizer is a substance that absorbs a specific actinic energy ray to shift to an electroexcitation state. The sensitizer in the electroexcitation state comes into contact with the photopolymerization initiator to cause an effect such as electron transfer, energy transfer, or generation of heat. This promotes a chemical change of the photopolymerization initiator, specifically, for example, decomposition, or generation of a radical, acid, or base.

Examples of the sensitizer include benzophenone, thioxanthone, isopropylthioxanthone, anthraquinone, 3-acylcoumarin derivative, terphenyl, styryl ketone, 3-(aroylmethylene)thiazoline, camphorquinone, eosine, rhodamine, and erythrosine.

Other preferred examples of the sensitizer include the compound represented by General formula (i) in JP2010-24276A and the compound represented by General formula (I) in JP1994-107718A (JP-H6-107718A).

Of these, the sensitizer is, from the viewpoints of suitability for LED light and the reactivity to the photopolymerization initiator, preferably at least one selected from the group consisting of thioxanthone, isopropylthioxanthone, and

benzophenone, more preferably at least one selected from the group consisting of thioxanthone and isopropylthioxanthone, still more preferably isopropylthioxanthone.

When the specified particles include a sensitizer, such sensitizers may be included alone or in combination of two or more thereof.

When the specified particles include a sensitizer, the content of the sensitizer relative to the solid content of the specified particles is preferably 0.1 mass% to 20 mass%, more preferably 0.2 mass% to 15 mass%, still more preferably 0.3 mass% to 10 mass%.

The specified particles including a photopolymerization initiator and a sensitizer can be produced by, for example, emulsifying a mixture provided by mixing together an oil-phase component including the polymer P (or the raw material compounds for producing the polymer P), a radical-polymerizable monomer, a photopolymerization initiator, and a sensitizer, and an aqueous-phase component.

Other component

The specified particles may include, in addition to the above-described components, another component.

The other component may be, for example, a compound including at least one selected from the group consisting of polysiloxane bonds (specifically, divalent polysiloxane groups), monovalent polysiloxane groups, monovalent fluorinated hydrocarbon groups, and divalent fluorinated hydrocarbon groups.

Method for producing aqueous dispersion of specified particles

The ink according to the present disclosure can be produced by producing an aqueous dispersion of the above-described specified particles containing the specified particles and water and by adding, to the obtained aqueous dispersion, another component as needed.

Alternatively, the ink according to the present disclosure is a form of the aqueous dispersion of the specified particles and hence, depending on the composition of the ink, the ink can be directly produced as an aqueous dispersion of the specified particles (specifically, no other components are added).

The method for producing the aqueous dispersion of the specified particles is not particularly limited.

Examples of the method for producing the aqueous dispersion of the specified particles include the following production method A and production method B.

Production method A

The production method A has a step of mixing together an oil-phase component including an organic solvent, the polymer P, and a polymerizable monomer and an aqueous-phase component including water and performing emulsification, to thereby obtain the aqueous dispersion of the specified particles.

The production method A is suitable as a method for producing an aqueous dispersion of specified particles including the polymer P that has the form of a chain polymer.

For the production method A, reference can be made to publicly known literature such as JP6584677B.

Production method B

The production method B has a step of mixing together an oil-phase component including an organic solvent, the raw material compounds of the polymer P (for example, a tri- or higher functional isocyanate compound and a compound having two or more active hydrogen groups), and a polymerizable monomer, and an aqueous-phase component including water and performing emulsification, to thereby obtain an aqueous dispersion of the specified particles.

The production method B is suitable as a method for producing an aqueous dispersion of specified particles (for example, microcapsules) including the polymer P having the form of a crosslinked polymer.

For the production method B, reference can be made to publicly known literature such as WO2016/052053A.

Coloring agent

The ink according to the present disclosure may be an ink containing at least one coloring agent (what is called "color ink"), or may be an ink not containing coloring agents (what is called "clear ink").

When the ink contains a coloring agent, the coloring agent is preferably contained outside of the specified particles (in other words, the specified particles do not include the coloring agent).

The coloring agent is not particularly limited, and can be freely selected from publicly known coloring agents such as pigments, water-soluble dyes, and disperse dyes and used. Of these, more preferably, pigments are included because

of high weather resistance and high color reproducibility.

Such a pigment is not particularly limited, and can be appropriately selected in accordance with the purpose; examples include publicly known organic pigments and inorganic pigments. Other examples of the pigment include resin particles dyed with dyes, and commercially available pigment dispersions and surface-treated pigments (for example, dispersions of pigments in dispersion media such as water, liquid compounds, or insoluble resins, and pigments surface-treated with resins, pigment derivatives, or the like).

Examples of the organic pigments and inorganic pigments include yellow pigments, red pigments, magenta pigments, blue pigments, cyan pigments, green pigments, orange pigments, purple pigments, brown pigments, black pigments, and white pigments.

In such a case of using, as the coloring agent, a pigment, a pigment dispersing agent may be used as needed.

In the case of using, as the coloring agent, a pigment, a self-dispersible pigment having hydrophilic groups on the surfaces of the pigment particles may be used as the pigment.

For the coloring agent and the pigment dispersing agent, reference can be appropriately made to Paragraphs 0180 to 0200 of JP2014-040529A and Paragraphs 0122 to 0129 of WO2016/052053A.

When the ink according to the present disclosure contains a coloring agent, the content of the coloring agent relative to the total amount of the ink is preferably 0.1 mass% to 20 mass%, more preferably 0.5 mass% to 10 mass%, particularly preferably 0.5 mass% to 5 mass%. Other component

The ink according to the present disclosure may contain, as needed, in addition to the above-described components, another component.

The other component may be included in the specified particles or may not be included in the specified particles.

The ink according to the present disclosure may contain, as a component that may be included in the specified particles or may not be included in the specified particles, a surfactant, a polymerization inhibitor, or an ultraviolet absorbent, for example.

The ink according to the present disclosure may contain, as needed, outside of the specified particles, a water-soluble polymerizable monomer, a water-soluble photopolymerization initiator, or a water-soluble resin, for example.

For these components, for example, reference can be made to Paragraphs 0134 to 0157 of WO2016/052053A.

Preferred method for producing ink

The method for producing the ink according to the present disclosure is not particularly limited, but is preferably

an embodiment including a step of performing the above-described method for producing an aqueous dispersion (the production method A or the production method B) to produce an aqueous dispersion of specified particles, and
a step of adding to, the aqueous dispersion of the specified particles, other components such as a pigment and a water-soluble organic solvent and performing mixing.

Another embodiment of the method for producing the ink according to the present disclosure may be an embodiment of performing a step of performing the above-described method for producing an aqueous dispersion (the production method A or the production method B) to produce an aqueous dispersion of specified particles, to thereby directly produce an ink being the aqueous dispersion of the specified particles (in other words, a method in which no other components are added to the aqueous dispersion of the specified particles).

Preferred properties of ink

For the ink according to the present disclosure, the ink set at 25°C to 50°C preferably has a viscosity of 3 mPa·s to 15 mPa·s, more preferably 3 mPa·s to 13 mPa·s. In particular, for the ink according to the present disclosure, the ink set at 25°C preferably has a viscosity of 50 mPa·s or less. When the ink has a viscosity in such a range, higher ejection stability can be achieved.

Note that the viscosity of the ink is a value measured using a viscometer.

As the viscometer, for example, VISCOMETER TV-22 (Toki Sangyo Co., Ltd.) can be employed.

Ink jet recording method

An example of the ink jet recording method according to the present disclosure (hereafter, also referred to as "recording method X") is an ink jet recording method including

a step of applying, onto a substrate, the above-described ink according to the present disclosure by an ink jet process (hereafter, also referred to as "application step"), and

a step of irradiating the ink having been applied onto the substrate, with an actinic energy ray (hereafter, also referred to as "irradiation step")
wherein a time from landing of the ink onto the substrate to starting of the irradiation with the actinic energy ray is 1.00 second or less.

The recording method X may include another step as needed.
Hereinafter, the procedure of irradiation with the actinic energy ray may be referred to as "exposure" and the time from landing of the ink onto the substrate to the starting of the irradiation with the actinic energy ray may be referred to as "time from landing of the ink to the starting of exposure".
In the recording method X, the ink according to the present disclosure is used, so that the same advantages as those provided by the ink according to the present disclosure are provided.
In the recording method X, the feature in which the time from landing of the ink to the starting of exposure is 1.00 second or less contributes to the improvement in the image quality of the image (for example, suppression of granularity of the image).
In general, when the time from landing of the ink to the starting of exposure is 1.00 second or less, in the ink having landed onto the substrate, the polymerizable monomer M insufficiently seeps out from the specified particles, which results in degradation of the rubfastness of the image in some cases.
However, in the recording method X, the ink according to the present disclosure is used, so that, in spite of the feature in which the time from landing of the ink to the starting of exposure is 1.00 second or less, the polymerizable monomer M seeps out from the specified particles to ensure the rubfastness of the image. Stated another way, advantages of the ink according to the present disclosure are effectively provided particularly when the time from landing of the ink to the starting of exposure is short as in the recording method X.

Substrate

The substrate used for the recording method X is not particularly limited, may be an impermeable substrate or a permeable substrate, and is preferably an impermeable substrate.
The impermeable substrate used herein refers to a substrate having a water absorption (unit: mass%, measurement time: 24 hours) of less than 10 measured by an ASTM test method according to ASTM D570.
The above-described water absorption of the impermeable substrate is preferably 5 or less.
Examples of the impermeable substrate include:
paper laminated with a plastic (for example, polyethylene, polypropylene, or polystyrene), metal plates (for example, plates of a metal such as aluminum, zinc, or copper), plastic films (for example, films of polyvinyl chloride (PVC: Polyvinyl Chloride) resins, cellulose diacetate, cellulose triacetate, cellulose propionate, cellulose butyrate, cellulose acetate butyrate, cellulose nitrate, polyethylene terephthalate (PET: Polyethylene Terephthalate), polyethylene (PE: Polyethylene), polystyrene (PS: Polystyrene), polypropylene (PP: Polypropylene), polycarbonate (PC: Polycarbonate), polyvinyl acetal, or acrylic resins), paper laminated with or vapor-deposited with the above-described metal, plastic films laminated with or vapor-deposited with the above-described metal, and leathers.
Examples of the leathers include natural leathers (also referred to as "real leathers"), and synthetic leathers (for example, PVC (polyvinyl chloride) leather and PU (polyurethane) leather). For leathers, for example, reference can be made to Paragraph 0163 to Paragraph 0165 of JP2009-058750A.
For example, in the case of forming a film on a plastic film or a leather serving as an impermeable substrate (for example, a seat for a vehicle, a bag, a shoe, or a purse), the film is desirably formed to have high rubfastness and high adhesiveness.
Also, in the case of forming a film on a substrate other than leathers and plastic films, the film may be desirably formed to have high rubfastness and high adhesiveness.
The film formation method according to the present disclosure can satisfy such desires.
The substrate may be surface-treated from the viewpoint of improving the surface energy.
Non-limiting examples of such a surface treatment include corona treatment, plasma treatment, flame treatment, heat treatment, abrasion treatment, light irradiation treatment (UV treatment), and flame treatment.

Application step

The application step is a step of applying, onto a substrate, the above-described ink according to the present disclosure by an ink jet process.

Application conditions etc. of ink

The ink application by an ink jet process can be performed by ejecting the ink from an ink jet head in a publicly known ink jet recording apparatus.
The ink jet head is preferably a piezoelectric ink jet head.
The ink jet head preferably has a resolution of 300 dpi or more, more preferably 600 dpi or more, still more preferably 800 dpi or more.
The dpi (dot per inch) used herein represents the number of dots per 2.54 cm (1 inch).
The drop volume (the drop volume per dot) of the ink ejected from the ink jet head is preferably 1 pL (picoliter) to 100 pL, more preferably 3 pL to 80 pL, still more preferably 3 pL to 50 pL.

Temperature etc. of substrate

The substrate has a surface on the side of landing of the ink, the surface having a temperature of, in the application step, preferably 20°C to 80°C, more preferably 25°C to 75°C, still more preferably 30°C to 70°C, yet more preferably 40°C to 70°C.
When the substrate has a surface on the side of landing of the ink, the surface having a temperature of 20°C to 80°C, the image quality and rubfastness of the image are further improved. The reason for this is that the effect of seepage of the monomer (M-1) from the specified particles is more likely to be provided inferentially.

Heating of substrate

The recording method X preferably satisfies at least one of including a preheating step of heating the substrate before the application step, or performing heating of the substrate and application of the ink in the application step.
This results in further improvement in the image quality and rubfastness of the image. The reason for this is that the effect of seepage of the polymerizable monomer M from the specified particles is more likely to be provided inferentially.
When the recording method X satisfies at least one of the above-described features, the temperature of the surface of the substrate is easily controlled to such a preferred temperature.
In each of the heating in the preheating step and the heating in the application step, heating means for heating the substrate is not particularly limited; examples include a heat drum, hot air, an infrared lamp, an infrared LED, an infrared heater, a heating oven, a hot plate, an infrared laser, and an infrared dryer.

Irradiation step

The irradiation step is a step of irradiating, with an actinic energy ray, the ink having been applied onto the substrate (stated another way, a step of exposing the ink having been applied onto the substrate).
In this step, irradiation with an actinic energy ray (namely, exposure) is performed to polymerize the polymerizable monomer M in the ink to cure the ink, to provide an image. More specifically, as described above, after the ink is landed, the polymerizable monomer M effectively seeps out from the specified particles, so that curing between specified particles (in other words, bonding between specified particles) sufficiently proceeds, which results in an image having high image quality and high rubfastness.
The actinic energy ray may be, for example, ultraviolet radiation (UV light), visible light, or an electron beam, and is, of these, preferably UV light.
The ink having been applied onto the substrate may be irradiated with an actinic energy ray while the substrate and the ink having been applied onto the substrate are heated.
For irradiation conditions and basic irradiation methods using an actinic energy ray, the irradiation conditions and irradiation methods disclosed in JP1985-132767A (JP-S60-132767A) can be applied.
In the recording method X, as described above, the time from landing of the ink to the starting of irradiation with an actinic energy ray is short (specifically, 1.00 second or less).
The ink application and irradiation with an actinic energy ray according to such an embodiment are preferably performed using an ink jet recording apparatus including a unit including an actinic-energy-ray-irradiation ink jet head and an actinic-energy-ray source disposed near the ink jet head.
With this unit, after the ink is ejected from the ink jet head of the unit to land the ink to a substrate, at a timing in a short time of 1.00 second or less from the landing, irradiation with the actinic energy ray from the actinic-energy-ray source of the unit can be performed.
Examples of the light source for irradiation with an actinic energy ray include a mercury lamp, a metal halide lamp, a high-pressure mercury lamp, a medium-pressure mercury lamp, a low-pressure mercury lamp, an ultraviolet fluorescent lamp, a gas laser, a solid-state laser, an LED (light-emitting diode), and an LD (laser diode).

Of these, the light source for irradiation with an actinic energy ray is preferably a light source for irradiation with ultraviolet radiation that is a metal halide lamp, a high-pressure mercury lamp, a medium-pressure mercury lamp, a low-pressure mercury lamp, or an ultraviolet LED (hereafter, also referred to as UV-LED).
The peak wavelength of the ultraviolet radiation is, for example, preferably 200 nm to 405 nm, more preferably 220 nm to 400 nm, still more preferably 340 nm to 400 nm.
The peak wavelength of light (LED light) from the LED light source is preferably 200 nm to 600 nm, more preferably 300 nm to 450 nm, still more preferably 320 nm to 420 nm, yet more preferably 340 nm to 405nm, still yet more preferably 355 nm, 365 nm, 385 nm, 395 nm, or 405 nm.
The UV-LED is, for example, a UV-LED manufactured by Nichia Corporation and having a main emission spectrum having a wavelength between 365 nm and 420 nm.
Another example is a UV-LED described in US6,084,250A and configured to emit an actinic radiation with a primary emission between 300 nm and 370 nm.
Some UV-LEDs may be combined to perform irradiation with ultraviolet rays in different wavelength regions.
The irradiation energy of the actinic energy ray (namely, exposure dose) is preferably 20 $mJ/cm^2$ or more, more preferably 100 $mJ/cm^2$ or more, still more preferably 500 $mJ/cm^2$ or more.
The upper limit of the exposure dose is not particularly limited and the upper limit may be 5 $J/cm^2$ or may be 1,500 $mJ/cm^2$.
The maximum illuminance of such an LED on the substrate is preferably 10 $mW/cm^2$ to 8,000 $mW/cm^2$, more preferably 20 $mW/cm^2$ to 5,000 $mW/cm^2$, still more preferably 30 $mW/cm^2$ to 3000 $mW/cm^2$, yet more preferably 50 $mW/cm^2$ to 1000 $mW/cm^2$.
The irradiation time of the actinic energy ray is preferably 0.01 seconds to 120 seconds, more preferably 0.1 seconds to 90 seconds.

Time from landing of ink to starting of exposure

In the recording method X, the time from landing of the ink to the starting of exposure (specifically, the time from landing of the ink onto the substrate to the starting of irradiation with an actinic energy ray) is 1.00 second or less.
As described above, the feature in which the time from landing of the ink to the starting of exposure is 1.00 second or less contributes to improvement in the image quality of the image.
The lower limit of the time from landing of the ink to the starting of exposure is not particularly limited; the lower limit may be, for example, 0.01 seconds, 0.05 seconds, or 0.10 seconds.

Drying step

The recording method X preferably further includes a drying step of heat-drying the ink having been irradiated with the actinic energy ray (namely, the image).
In this case, the rubfastness of the image is further improved and the stickiness of the image is further suppressed.
The heating means for heating the ink is not particularly limited; examples include a heat drum, hot air, an infrared lamp, an infrared LED, an infrared heater, a heating oven, a hot plate, an infrared laser, and an infrared dryer.
In the heat-drying, the heating temperature is preferably 40°C or more, more preferably 40°C to 200°C, still more preferably 40°C to 100°C, yet more preferably 40°C to 80°C, still yet more preferably 45°C to 70°C.
The heating temperature refers to the temperature of the ink on the substrate, and can be measured with a thermograph using an infrared thermography apparatus H2640 (manufactured by Nippon Avionics Co., Ltd.).
The heating time can be appropriately set in accordance with, for example, the heating temperature, the composition of the ink, and printing speed. The heating time is preferably 5 seconds or more, more preferably 5 seconds to 20 minutes, still more preferably 10 seconds to 10 minutes, yet more preferably 20 seconds to 5 minutes.

EXAMPLES

Hereinafter, the present invention will be specifically described with reference to Examples; however, the present invention is not limited to the following Examples.
In the following description, "parts" refers to parts by mass unless otherwise specified.
The term "room temperature" refers to 25°C unless otherwise specified.

Preparation of polymer P

As the polymer P included in the specified particles, Urethanes A to E and G to I, and Acryl F were prepared.

Detailed descriptions are as follows.

Preparation of Urethane A

Into a three-neck flask,

dimethylolpropionic acid (DMPA)(7.8 g),
isophorone diisocyanate (IPDI) (28.0 g),
DURANOL T5652 (manufactured by Asahi Kasei Corporation, polycarbonatediol; hereafter, also referred to as T5652) (17.5 g),
bisphenol A epoxy diacrylate (21.2 g),
SILAPLANE FM-DA11 (manufactured by JNC CORPORATION, reactive silicone (diol compound including polysiloxane bonds); hereafter, also referred to as FM-DA11) (11.1 g), and methyl ethyl ketone (55.0 g)
were charged and heated to 70°C. To this, 0.1 g of NEOSTANN U-600 (manufactured by Nitto Kasei Co., Ltd., inorganic bismuth catalyst; hereafter, also referred to as U-600) was added and stirring was performed at 70°C for 7 hours.

Subsequently, to this, isopropanol (IPA) (59.9 g) serving as an end-capping agent and methyl ethyl ketone (84.7 g) were added and stirring was performed at 70°C for 7 hours. After the stirring for 7 hours, leaving to cool to room temperature was performed and subsequently methyl ethyl ketone was used to adjust the concentration to thereby obtain a 30 mass% solution of Urethane A (solvent: mixed solvent of IPA and methyl ethyl ketone).

Urethane A was found to have a weight-average molecular weight (Mw) of 30000 and an acid value of 0.7 mmol/g. Urethane A has, as a photopolymerizable group, an acryloyl group.

Preparation of Urethane B

Into a three-neck flask,

dimethylolpropionic acid (DMPA) (10.7 g),
isophorone diisocyanate (IPDI) (37.3 g),
polyethylene glycol (molecular weight: 2000) (40.4 g),
bisphenol A epoxy diacrylate (29.0 g), and
methyl ethyl ketone (76.2 g)
were charged and heated to 70°C. To this, 0.2 g of NEOSTANN U-600 was added and stirring was performed at 70°C for 7 hours.

Subsequently, to this, isopropanol (IPA) (82.2 g) serving as an end-capping agent and methyl ethyl ketone (115.5 g) were added and stirring was performed at 70°C for 7 hours. After the stirring for 7 hours, leaving to cool to room temperature was performed and subsequently methyl ethyl ketone was used to adjust the concentration to thereby obtain a 30 mass% solution of Urethane B (solvent: mixed solvent of IPA and methyl ethyl ketone).

Urethane B was found to have a weight-average molecular weight (Mw) of 30000 and an acid value of 0.7 mmol/g. Urethane B has, as a photopolymerizable group, an acryloyl group.

Preparation of Urethane C

Into a three-neck flask,

dimethylolpropionic acid (DMPA) (7.2 g),
dicyclohexylmethane-4,4-diisocyanate (HMDI) (41.2 g),
tricyclodecanedimethanol (11.0 g),
bisphenol A epoxy diacrylate (19.4 g), and
ethyl acetate (45.2 g)
were charged and heated to 70°C. To this, 0.1 g of NEOSTANN U-600 was added and stirring was performed at 70°C for 7 hours.

Subsequently, to this, isopropanol (IPA) (55.2 g) serving as an end-capping agent and ethyl acetate (76.3 g) were added and stirring was performed at 70°C for 7 hours. After the stirring for 7 hours, leaving to cool to room temperature was performed and subsequently ethyl acetate was used to adjust the concentration to thereby obtain a 30 mass% solution of

Urethane C (solvent: mixed solvent of IPA and ethyl acetate).

Urethane C was found to have a weight-average molecular weight (Mw) of 30000 and an acid value of 0.7 mmol/g. Urethane C has, as a photopolymerizable group, an acryloyl group.

Preparation of Urethane D

Into a three-neck flask,

dimethylolpropionic acid (DMPA) (8.2 g),
isophorone diisocyanate (IPDI) (24.5 g),
polypropylene glycol (molecular weight: 2000) (38.7 g),
bisphenol A epoxy diacrylate (7.0 g),
FM-DA11 (11.7 g), and
methyl ethyl ketone (58.1 g)
were charged and heated to 70°C. To this, 0.1 g of NEOSTANN U-600 was added and stirring was performed at 70°C for 7 hours.

Subsequently, to this, isopropanol (IPA) (63.1 g) serving as an end-capping agent and methyl ethyl ketone (89.1 g) were added and stirring was performed at 70°C for 7 hours. After the stirring for 7 hours, leaving to cool to room temperature was performed and subsequently methyl ethyl ketone was used to adjust the concentration to thereby obtain a 30 mass% solution of Urethane D (solvent: mixed solvent of IPA and methyl ethyl ketone).

Urethane D was found to have a weight-average molecular weight (Mw) of 30000 and an acid value of 0.7 mmol/g. Urethane D has, as a photopolymerizable group, an acryloyl group.

Preparation of Urethane E

Into a three-neck flask,

dimethylolpropionic acid (DMPA) (8.2 g),
isophorone diisocyanate (IPDI) (24.5 g),
PLACCEL 220N (manufactured by Daicel Corporation, polycaprolactonediol; also referred to as PCL220N) (38.7 g),
bisphenol A epoxy diacrylate (7.0 g),
FM-DA11 (11.7 g), and
methyl ethyl ketone (58.1 g)
were charged and heated to 70°C. To this, 0.1 g of NEOSTANN U-600 was added and stirring was performed at 70°C for 7 hours.

Subsequently, to this, isopropanol (IPA) (63.1 g) serving as an end-capping agent and methyl ethyl ketone (89.1 g) were added and stirring was performed at 70°C for 7 hours. After the stirring for 7 hours, leaving to cool to room temperature was performed and subsequently methyl ethyl ketone was used to adjust the concentration to thereby obtain a 30 mass% solution of Urethane E (solvent: mixed solvent of IPA and methyl ethyl ketone).

Urethane E was found to have a weight-average molecular weight (Mw) of 30000 and an acid value of 0.7 mmol/g. Urethane E has, as a photopolymerizable group, an acryloyl group. Preparation of Acryl F

Into a three-neck flask, ethyl acetate (64.9 g) was charged and, under a stream of nitrogen at 20 mL/min, stirring was performed at 70°C for 30 minutes. To this, a mixed solution of methacrylic acid (MAA) (6.0 g), methyl methacrylate (60.0 g), n-butyl acrylate (34.0 g), V-65 (manufactured by FUJIFILM Wako Pure Chemical Corporation) (5.4 g), ethyl acetate (10.8 g), and isopropanol (IPA) (32.5 g) under cooling in an ice bath was added dropwise over 4 hours and furthermore stirring under heating was performed for 1 hour. Subsequently, heating to 80°C was performed, and subsequently stirring was performed for 2 hours; leaving to cool to room temperature was performed and ethyl acetate was used to adjust the concentration to thereby obtain a 30 mass% solution of Acryl F (solvent: mixed solvent of IPA and ethyl acetate).

Acryl F was found to have a weight-average molecular weight (Mw) of 30000 and an acid value of 0.7 mmol/g.

Preparation of Urethane G

Into a three-neck flask,

dimethylolpropionic acid (DMPA) (7.5 g),

isophorone diisocyanate (IPDI) (46.6 g),
tricyclodecanedimethanol (21.2 g),
bisphenol A epoxy diacrylate (7.5 g),
FM-DA11 (12.6 g), and
methyl ethyl ketone (64.5 g)

were charged and heated to 70°C. To this, 0.1 g of NEOSTANN U-600 (manufactured by Nitto Kasei Co., Ltd., inorganic bismuth catalyst; hereafter, also referred to as U-600) was added and stirring was performed at 70°C for 7 hours.

Subsequently, to this, isopropanol (IPA) (67.7 g) serving as an end-capping agent and methyl ethyl ketone (95.5 g) were added and stirring was performed at 70°C for 7 hours. After the stirring for 7 hours, leaving to cool to room temperature (25°C; hereafter, the same definition) was performed; subsequently, methyl ethyl ketone was used to adjust the concentration to thereby obtain a 30 mass% solution of Urethane G (solvent: mixed solvent of IPA and methyl ethyl ketone).

Urethane G was found to have a weight-average molecular weight (Mw) of 30000 and an acid value of 0.7 mmol/g. Urethane G has, as a photopolymerizable group, an acryloyl group.

Preparation of Urethane H (Mw: 8000)

The same procedures were performed as in the preparation of Urethane A (Mw: 30000) except that the reaction time was shortened, to thereby prepare Urethane H (Mw: 8000).

Preparation of Urethane I (Mw: 70000)

The same procedures were performed as in the preparation of Urethane A (Mw: 30000) except that the reaction time was extended, to thereby prepare Urethane I (Mw: 70000).

Example 1

Preparation of aqueous dispersion of specified particles

Preparation of oil-phase component

The 30 mass% solution of Urethane A (66.7 g),

SR833S serving as a polymerizable monomer M (20.0 g),
IRGACURE (registered trademark) 819 serving as a photopolymerization initiator (1.5 g),
ITX (isopropylthioxanthone) serving as a sensitizer (0.25 g), and
ethyl acetate (36.7 g)

were mixed together and stirred at room temperature for 30 minutes, to obtain an oil-phase component.

SR833S is a bifunctional radical-polymerizable monomer and is specifically tricyclodecanedimethanol diacrylate (molecular weight: 304).

IRGACURE (registered trademark) 819 is an acylphosphine oxide-based radical polymerization initiator and is specifically bis(2,4,6-trimethylbenzoyl)-phenylphosphine oxide.

Preparation of aqueous-phase component

Distilled water (140 g) and sodium hydroxide serving as a neutralizer were mixed together and stirred for 15 minutes to thereby prepare an aqueous-phase component.

The amount of sodium hydroxide used as a neutralizer was adjusted such that, in the particles to be produced, the degree of neutralization became 90%.

Preparation of aqueous dispersion of specified particles

The oil-phase component and the aqueous-phase component were mixed together, and the resultant mixture was emulsified at room temperature with a homogenizer at 12000 rpm for 10 minutes, to obtain an emulsion.

To the obtained emulsion, distilled water (60 g) was added; the resultant liquid was heated to 50°C, and stirred at

50°C for 5 hours, to thereby distill off ethyl acetate from the liquid.

The liquid from which ethyl acetate had been driven off was diluted with distilled water such that the solid content became 20 mass%, to thereby obtain an aqueous dispersion of specified particles (specified-particle content: 20 mass%).

The specified particles were found to have a volume-average dispersion particle size of 150 nm.

Preparation of ink

The components of the following composition were mixed together to prepare an ink.

Composition of ink

·The aqueous dispersion of specified particles (specified-particle content: 20 mass%):
52 parts
·Pigment dispersion liquid (Pro-jet Cyan APD1000 (manufactured by FUJIFILM Imaging Colorants), pigment concentration: 14 mass%):
15 parts
·Fluorine-based surfactant (manufactured by E. I. du Pont de Nemours and Company, Capstone FS-31, solid content: 25 mass%):
0.3 parts
·Propylene glycol (PG):
15 parts
·Water:
the remainder of 100 parts in total

Table 2-2 describes, in the above-described ink,

a Ws/Wm ratio, which is the ratio of the mass content Ws of the water-soluble organic solvent to the mass content Wm of the polymerizable monomer M (hereafter, also referred to as "Ws/Wm"),
ΔHSP(s-m), which is the HSP distance between the water-soluble organic solvent and the polymerizable monomer M,
a Ws/Wp ratio, which is the ratio of the mass content Ws of the water-soluble organic solvent to the mass content Wp of the polymer P (hereafter, also referred to as "Ws/Wp"), and
ΔHSP(s-p), which is the HSP distance between the polymer P and the water-soluble organic solvent.

Note that, in each of Examples and each of Comparative Examples, δD, δP, and δH of the compounds determined by the above-described method were used to calculate ΔHSP(s-m) and ΔHSP(s-p).

Table 1 describes δD, δP, and δH of the compounds determined by the above-described method.

Table 1

| | | δD | δP | δH |
|---|---|---|---|---|
| Water-soluble organic solvent | PG | 17.3 | 10.2 | 22.1 |
| | 1,2-BD | 16.9 | 9.0 | 19.7 |
| | MP Diol | 17.2 | 9.6 | 21.2 |
| | DEG | 17.4 | 11.0 | 20.6 |
| | DPGmME | 16.3 | 6.4 | 9.9 |
| | EG | 17.8 | 13.5 | 27.4 |

(continued)

| | | δD | δP | δH |
|---|---|---|---|---|
| Polymerizable monomer M | SR833S | 17.0 | 3.1 | 3.7 |
| | SR238 | 16.3 | 3.9 | 5.1 |
| | SR339 | 17.8 | 5.0 | 6.0 |
| | SR295 | 16.6 | 2.2 | 6.8 |
| | SR268 | 16.3 | 4.6 | 7.2 |
| | A-400 | 15.7 | 4.3 | 9.1 |
| | VISCOAT #802 | 16.4 | 0.3 | 15.9 |
| | GPO3A | 16.3 | 3.1 | 6.3 |
| | FA-513A | 17.1 | 3.2 | 3.1 |
| Polymer P | Urethane A | 16.2 | 5.8 | 10.6 |
| | Urethane B | 16.3 | 7.5 | 15.2 |
| | Urethane C | 16.4 | 7.2 | 13.9 |
| | Urethane D | 15.9 | 4.7 | 9.0 |
| | Urethane E | 15.6 | 3.6 | 7.1 |
| | Acryl F | 15.7 | 4.8 | 6.2 |
| | Urethane G | 16.2 | 6.2 | 11.8 |
| | Urethane H | 16.2 | 5.8 | 10.6 |
| | Urethane I | 16.2 | 5.8 | 10.6 |

Image recording

An ink cartridge of an ink jet recording apparatus (product name "DMP-2850", manufactured by FUJIFILM Corporation) was filled with the above-described ink, and an image was recorded in the following manner on a PVC (polyvinyl chloride) film serving as a substrate.

As the PVC film serving as the substrate, "AVERY (registered trademark) 400 GLOSS WHITE PERMANENT" manufactured by AVERY DENNISON CORPORATION was employed.

The substrate was heated such that a surface to which the ink was to be applied (in other words, a surface to which the ink was to be landed) had a temperature of 50°C (preheating step). This preheating was performed using, in DMP-2850, a platen heater disposed on the upstream side in the substrate transport direction relative to the ink jet head.

Onto the heated substrate, the ink was ejected from the ink jet head of the ink jet recording apparatus and applied (application step). The ink ejection conditions were set to 900 dpi (dots per inch) and 10 pL per dot. The ink was applied while heating of the substrate was maintained, so that the ink was landed to the surface of the substrate, the surface being maintained at 50°C. The heating of the substrate was maintained using a platen heater disposed, in DMP-2850, under the ink jet head (namely, in the ink application region).

The ink having been applied onto the substrate was irradiated with (in other words, exposed to) UV light (peak wavelength: 395 nm) from a 395 nm LED lamp (product name "PEL UV CURE UNIT", manufactured by PRINTED ELECTRONICS LIMITED) disposed near the ink jet head (irradiation step). The irradiation energy of the UV light was set to 1000 $mJ/cm^2$.

The time from landing of the ink to exposure (specifically, the time from landing of the ink onto the substrate to the starting of irradiation with UV light) was controlled to be 0.20 seconds (refer to Table 2-2).

Subsequently, the exposed ink was heat-dried under conditions of 50°C and 180 seconds, to obtain an image (drying step). The ink was heat-dried by bringing a surface of the substrate, the surface being on a side opposite from the ink application surface, into contact with a hot plate.

Evaluations

The ink obtained above was used and evaluated as described below.

The results will be described in Table 2-2.

Preservation stability of ink

Procedures of, within 1 hour after the preparation of the ink, placing a sealed container containing the ink into a thermostat at 60°C, and leaving the sealed container containing the ink in this state for 2 weeks (hereafter, also referred to as the preservation test) were performed.
Before and after the preservation test, the viscosity of the ink was measured and a formula below was used to calculate the viscosity change ratio of the ink. The viscosity of the ink was measured using a VISCOMETER TV-22 (manufactured by TOKI SANGYO CO. LTD) at a temperature of 25°C.

Viscosity change ratio = (Viscosity of ink after preservation test)/(Viscosity of ink before preservation test)

On the basis of the determined viscosity change ratio, the preservation stability of the ink was evaluated in accordance with evaluation ranks below.
In the following evaluation ranks, the highest rank in terms of the preservation stability of the ink is "5" .

Evaluation ranks of preservation stability

5: The viscosity change ratio was less than 1.1.
4: The viscosity change ratio was 1.1 or more and less than 1.2.
3: The viscosity change ratio was 1.2 or more and less than 1.3.
2: The viscosity change ratio was 1.3 or more and less than 2.
1: The viscosity change ratio was 2 or more.

Rubfastness of image

In accordance with the above-described procedure of image recording, on a substrate (PVC film), a 10 cm × 3 cm rectangular solid image was recorded at a recording duty of 100% to obtain a recorded product.
The obtained recorded product was left in an environment at 25°C and at a relative humidity of 50% for 24 hours. The image recorded surface of the recorded product having been left was rubbed 100 times, using a Gakushin-type rubbing tester, under application of a load of 200 g, using a cotton fabric (Canequim No. 3).
In the recorded product having been subjected to such procedures, the image recorded surface was visually observed and, in accordance with evaluation ranks below, evaluation in terms of rubfastness of the image was performed.
In the following evaluation ranks, the highest rank in terms of rubfastness of the image is "5".

Evaluation ranks of rubfastness of image

5: In the image, rubbing marks were not formed.
4: In the image, rubbing marks were formed, but did not reach the substrate (substrate).
3: In the image, rubbing marks were formed and some rubbing marks reached the substrate (substrate); the area of exposed substrate corresponds to more than 0% and less than 5% of the area of the image at the time of recording (30 $cm^2$).
2: In the image, rubbing marks were formed and some rubbing marks reached the substrate (substrate); the area of exposed substrate corresponds to 5% or more and less than 50% of the area of the image at the time of recording (30 $cm^2$).
1: In the image, rubbing marks were formed and some rubbing marks reached the substrate (substrate); the area of exposed substrate corresponds to 50% or more of the area of the image at the time of recording (30 $cm^2$).

Blocking resistance of image

In accordance with the above-described procedure of image recording, on a substrate (PVC film), a 5 cm × 5 cm square solid image was recorded to obtain a recorded product.
In the obtained recorded product, on the image recorded surface, an A6-size PVC film (hereafter, referred to as "PVC film 2") was placed. A load of 300 $g/cm^2$ was applied onto the PVC film 2 placed on the image recorded surface and

this state was maintained at 40°C for 24 hours.

After 24 hours elapsed, the recorded product and the PVC film 2 were separated from each other; in the recorded product, the solid image was visually observed and evaluated in terms of blocking resistance of the image in accordance with evaluation ranks below.

In the following evaluation ranks, the highest rank in terms of blocking resistance of the image, in other words, the highest rank in terms of suppression of blocking of the image (specifically, a phenomenon in which, in the case of placing an article on and in contact with the image, the contact article adheres to the image) is "5".

Evaluation ranks of blocking resistance of image

5: Peeling and a decrease in the density of the image are not visually observed.
4: In at least a portion of the image, a decrease in the density is visually observed, but peeling of the image is not visually observed.
3: Peeling of the image is visually observed and the area of the peeling accounts for more than 0% and less than 5% of the area of the image at the time of recording (25 $cm^2$).
2: Peeling of the image is visually observed and the area of the peeling accounts for 5% or more and less than 50% of the area of the image at the time of recording (25 $cm^2$).
1: Peeling of the image is visually observed and the area of the peeling accounts for 50% or more of the area of the image at the time of recording (25 $cm^2$).

Evaluation of image quality

In accordance with the above-described procedure of image recording, on a substrate (PVC film), 2 cm × 2 cm square solid images were recorded at recording duties of 25%, 50%, 75%, and 100%, to obtain a recorded product (specifically a recorded product including an image group composed of four solid images).

In the obtained recorded product, the image group as a whole was observed at a distance of 20 cm, 30 cm, or 50 cm and evaluated in terms of image quality (granularity) of the images in accordance with evaluation ranks below.

In the following evaluation ranks, the highest rank in terms of image quality of the images (in other words, the highest rank in terms of suppression of granularity of the images) is "5".

Evaluation ranks of image quality of image

5: In all the cases of observation at a distance of 20 cm, observation at a distance of 30 cm, and observation at a distance of 50 cm, granularity was not recognized over the entirety of the image group.
4: In observation at a distance of 20 cm, granularity was recognized in a portion of the image group; however, in observation at a distance of 30 cm and observation at a distance of 50 cm, granularity was not recognized over the entirety of the image group.
3: In observation at a distance of 20 cm and observation at a distance of 30 cm, granularity was recognized in a portion of the image group; however, in observation at a distance of 50 cm, granularity was not recognized over the entirety of the image group.
2: In all the cases of observation at a distance of 20 cm, observation at a distance of 30 cm, and observation at a distance of 50 cm, granularity was recognized in a portion of the image group.
1: In all the cases of observation at a distance of 20 cm, observation at a distance of 30 cm, and observation at a distance of 50 cm, granularity was recognized over the entirety of the image group.

Examples 2, 3, 6, and 7, and Comparative Example 1

The same procedures as in Example 1 were performed except that the amount of the polymerizable monomer M charged during preparation of the aqueous dispersion of specified particles and the amount of the aqueous dispersion of specified particles charged during preparation of the ink were adjusted such that the polymerizable monomer M content relative to the total ink amount was changed as described in Table 2-1 and Table 3-1.

The results will be described in Table 2-2 and Table 3-2.

Examples 4, 5, and 14 and Comparative Example 2

The same procedures as in Example 1 were performed except that the amount of the water-soluble organic solvent charged during preparation of the ink was changed such that the content of the water-soluble organic solvent relative to the total ink amount was changed as described in Table 2-1 and Table 3-1.
The results will be described in Table 2-2 and Table 3-2.

Examples 8 to 11 and 15 to 18

The same procedures as in Example 1 were performed except that the species of the solution of the polymer P during preparation of the aqueous dispersion of specified particles was changed such that the species of the polymer P contained in the specified particles in the ink was changed as described in Table 2-1.
The results will be described in Table 2-2.

Examples 12 and 13

The same procedures as in Example 1 were performed except that the amount of the solution of the polymer P (namely, Urethane A) charged during preparation of the aqueous dispersion of specified particles and the amount of the aqueous dispersion of specified particles charged during preparation of the ink were adjusted such that the content of the polymer P (namely, Urethane A) relative to the total ink amount was changed as described in Table 2-1.
The results will be described in Table 2-2.

Examples 19 to 27, 32, and 33, Reference Examples 28 to 31, and Comparative Examples 3 to 7

The same procedures as in Example 1 were performed except that the water-soluble organic solvent and/or the polymerizable monomer M was changed as described in Table 2-1 and Table 3-1.
The results will be described in Table 2-2 and Table 3-2.

Example 32

The same procedures as in Example 1 were performed except that the time from landing of the ink to exposure was changed as described in Table 3-2.
In Example 32, exposure was performed not using the light source near the ink jet head, but using a conveyor-type LED exposure device disposed on the downstream side relative to the ink jet head. For the UV light in the irradiation, the peak wavelength and the irradiation energy were both set as in Example 1. The heat-drying after the exposure was also performed as in Example 1.
The results will be described in Table 3-2.

Table 2-1

| | Ink | | | | | | | | | |
|---|---|---|---|---|---|---|---|---|---|---|
| | Water-soluble organic solvent | | | Polymer P | | | | Polymerizable monomer M | | |
| | Species | Boiling point (°C) | Content (mass%) | Species | Tg (°C) | Molecular weight | Content (mass%) | Species | Viscosity (mPa·s) | Content (mass%) |
| Example 1 | PG | 188 | 15 | Urethane A | 50 | 30000 | 5.0 | SR833S | 130 | 5.0 |
| Example 2 | PG | 188 | 15 | Urethane A | 50 | 30000 | 5.0 | SR833S | 130 | 7.0 |
| Example 3 | PG | 188 | 15 | Urethane A | 50 | 30000 | 5.0 | SR833S | 130 | 3.0 |
| Example 4 | PG | 188 | 10 | Urethane A | 50 | 30000 | 5.0 | SR833S | 130 | 5.0 |
| Example 5 | PG | 188 | 25 | Urethane A | 50 | 30000 | 5.0 | SR833S | 130 | 5.0 |
| Example 6 | PG | 188 | 15 | Urethane A | 50 | 30000 | 5.0 | SR833S | 130 | 12.0 |
| Example 7 | PG | 188 | 15 | Urethane A | 50 | 30000 | 5.0 | SR833S | 130 | 2.4 |
| Example 8 | PG | 188 | 15 | Urethane B | 50 | 30000 | 5.0 | SR833S | 130 | 5.0 |
| Example 9 | PG | 188 | 15 | Urethane C | 50 | 30000 | 5.0 | SR833S | 130 | 5.0 |
| Example 10 | PG | 188 | 15 | Urethane D | 50 | 30000 | 5.0 | SR833S | 130 | 5.0 |
| Example 11 | PG | 188 | 15 | Urethane E | 50 | 30000 | 5.0 | SR833S | 130 | 5.0 |
| Example 12 | PG | 188 | 15 | Urethane A | 50 | 30000 | 16.0 | SR833S | 130 | 5.0 |
| Example 13 | PG | 188 | 15 | Urethane A | 50 | 30000 | 2.4 | SR833S | 130 | 5.0 |
| Example 14 | PG | 188 | 32 | Urethane A | 50 | 30000 | 5.0 | SR833S | 130 | 5.0 |

(continued)

| | Ink | | | | | | | | | |
|---|---|---|---|---|---|---|---|---|---|---|
| | Water-soluble organic solvent | | | Polymer P | | | | Polymerizable monomer M | | |
| | Species | Boiling point (°C) | Content (mass%) | Species | Tg (°C) | Molecular weight | Content (mass%) | Species | Viscosity (mPa·s) | Content (mass%) |
| Example 15 | PG | 188 | 15 | Acryl F | 50 | 30000 | 5.0 | SR833S | 130 | 5.0 |
| Example 16 | PG | 188 | 15 | Urethane G | 100 | 30000 | 5.0 | SR833S | 130 | 5.0 |
| Example 17 | PG | 188 | 15 | Urethane H | 50 | 8000 | 5.0 | SR833S | 130 | 5.0 |
| Example 18 | PG | 188 | 15 | Urethane I | 50 | 70000 | 5.0 | SR833S | 130 | 5.0 |
| Example 19 | PG | 188 | 15 | Urethane A | 50 | 30000 | 5.0 | SR238 | 7 | 5.0 |
| Example 20 | PG | 188 | 15 | Urethane A | 50 | 30000 | 5.0 | SR339 | 10 | 5.0 |
| Example 21 | PG | 188 | 15 | Urethane A | 50 | 30000 | 5.0 | SR833S<br>SR295 | 130<br>342 | 3.0<br>2.0 |
| Example 22 | PG | 188 | 15 | Urethane A | 50 | 30000 | 5.0 | SR833S<br>SR295 | 130<br>342 | 2.0<br>3.0 |
| Example 23 | PG | 188 | 15 | Urethane A | 50 | 30000 | 5.0 | SR295 | 342 | 5.0 |

Table 2-2

| | Ink | | | | Time from landing of ink to starting of exposure (s) | Evaluation results | | | |
|---|---|---|---|---|---|---|---|---|---|
| | Ws/Wm | ΔHSP (s-m) | Ws/Wp | ΔHSP (s-p) | | Preservation stability | Rubfastness | Blocking resistance | Image quality |
| Example 1 | 3.0 | 19.7 | 3.0 | 12.5 | 0.20 | 5 | 5 | 5 | 5 |
| Example 2 | 2.1 | 19.7 | 3.0 | 12.5 | 0.20 | 5 | 5 | 5 | 5 |
| Example 3 | 5.0 | 19.7 | 3.0 | 12.5 | 0.20 | 5 | 5 | 5 | 5 |
| Example 4 | 2.0 | 19.7 | 2.0 | 12.5 | 0.20 | 5 | 5 | 5 | 5 |
| Example 5 | 5.0 | 19.7 | 5.0 | 12.5 | 0.20 | 5 | 5 | 5 | 5 |
| Example 6 | 1.3 | 19.7 | 3.0 | 12.5 | 0.20 | 5 | 4 | 5 | 4 |
| Example 7 | 6.3 | 19.7 | 3.0 | 12.5 | 0.20 | 4 | 5 | 5 | 5 |
| Example 8 | 3.0 | 19.7 | 3.0 | 7.7 | 0.20 | 4 | 5 | 5 | 5 |
| Example 9 | 3.0 | 19.7 | 3.0 | 8.9 | 0.20 | 5 | 5 | 5 | 5 |
| Example 10 | 3.0 | 19.7 | 3.0 | 14.5 | 0.20 | 5 | 5 | 5 | 5 |
| Example 11 | 3.0 | 19.7 | 3.0 | 16.7 | 0.20 | 5 | 4 | 5 | 4 |
| Example 12 | 3.0 | 19.7 | 0.9 | 12.5 | 0.20 | 5 | 4 | 5 | 4 |
| Example 13 | 3.0 | 19.7 | 6.3 | 12.5 | 0.20 | 4 | 5 | 5 | 5 |
| Example 14 | 6.4 | 19.7 | 6.4 | 12.5 | 0.20 | 3 | 5 | 5 | 5 |
| Example 15 | 3.0 | 19.7 | 3.0 | 17.1 | 0.20 | 5 | 3 | 5 | 3 |
| Example 16 | 3.0 | 19.7 | 3.0 | 11.3 | 0.20 | 5 | 5 | 5 | 4 |
| Example 17 | 3.0 | 19.7 | 3.0 | 12.5 | 0.20 | 4 | 5 | 5 | 5 |
| Example 18 | 3.0 | 19.7 | 3.0 | 12.5 | 0.20 | 5 | 5 | 4 | 5 |
| Example 19 | 3.0 | 18.2 | 3.0 | 12.5 | 0.20 | 4 | 5 | 5 | 5 |
| Example 20 | 3.0 | 16.9 | 3.0 | 12.5 | 0.20 | 5 | 5 | 5 | 5 |
| Example 21 | 3.0 | 18.7 | 3.0 | 12.5 | 0.20 | 5 | 5 | 5 | 5 |

(continued)

| | Ink | | | | Time from landing of ink to starting of exposure (s) | Evaluation results | | | |
|---|---|---|---|---|---|---|---|---|---|
| | Ws/Wm | ΔHSP (s-m) | Ws/Wp | ΔHSP (s-p) | | Preservation stability | Rubfastness | Blocking resistance | Image quality |
| Example 22 | 3.0 | 18.3 | 3.0 | 12.5 | 0.20 | 5 | 4 | 5 | 4 |
| Example 23 | 3.0 | 17.3 | 3.0 | 12.5 | 0.20 | 5 | 3 | 5 | 3 |

Table 3-1

| | Ink | | | | | | | | | |
|---|---|---|---|---|---|---|---|---|---|---|
| | Water-soluble organic solvent | | | Polymer P | | | | Polymerizable monomer M | | |
| | Species | Boiling point (°C) | Content (mass%) | Species | Tg (°C) | Molecular weight | Content (mass%) | Species | Viscosity (mPa·s) | Content (mass%) |
| Example 24 | PG | 188 | 15 | Urethane A | 50 | 30000 | 5.0 | SR268 | 20 | 5.0 |
| Example 25 | PG | 188 | 15 | Urethane A | 50 | 30000 | 5.0 | SR833S<br>A-400 | 130<br>25 | 1.5<br>3.5 |
| Example 26 | PG | 188 | 15 | Urethane A | 50 | 30000 | 5.0 | SR833S<br>A-400 | 130<br>25 | 1.0<br>4.0 |
| Example 27 | PG | 188 | 15 | Urethane A | 50 | 30000 | 5.0 | FA-513A | 12 | 5.0 |
| Reference Example 28 | EG | 196 | 15 | Urethane A | 50 | 30000 | 5.0 | GPO3A | 130 | 5.0 |
| Reference Example 29 | 1,2-BD | 193 | 15 | Urethane A | 50 | 30000 | 5.0 | SR833S | 130 | 5.0 |
| Reference Example 30 | MP Diol | 214 | 15 | Urethane A | 50 | 30000 | 5.0 | SR833S | 130 | 5.0 |
| Reference Example 31 | PG<br>DEG | 188<br>245 | 6<br>9 | Urethane A | 50 | 30000 | 5.0 | SR833S | 130 | 5.0 |
| Example 32 | PG | 188 | 15 | Urethane A | 50 | 30000 | 5.0 | SR833S | 130 | 5.0 |
| Example 33 | PG<br>1,2-BD | 188<br>193 | 12<br>3 | Urethane A | 50 | 30000 | 5.0 | SR833S<br>GPO3A | 130<br>95 | 2.5<br>2.5 |
| Comparative Example 1 | PG | 188 | 15 | Urethane A | 50 | 30000 | 5.0 | SR833S | 130 | 15.0 |
| Comparative Example 2 | PG | 188 | 5 | Urethane A | 50 | 30000 | 5.0 | SR833S | 130 | 5.0 |
| Comparative Example 3 | PG | 188 | 15 | Urethane A | 50 | 30000 | 5.0 | A-400 | 25 | 5.0 |
| Comparative Example 4 | PG | 188 | 15 | Urethane A | 50 | 30000 | 5.0 | VISCOAT #802 | 9000 | 5.0 |
| Comparative Example 5 | DPGmME | 188 | 15 | Urethane A | 50 | 30000 | 5.0 | SR833 | 130 | 5.0 |
| Comparative Example 6 | EG | 196 | 15 | Urethane A | 50 | 30000 | 5.0 | SR833 | 130 | 5.0 |
| Comparative Example 7 | MP Diol | 214 | 5 | Urethane A | 50 | 30000 | 5.0 | SR833 | 130 | 5.0 |

Table 3-2

| | Ink | | | | Time from landing of ink to starting of exposure (s) | Evaluation results | | | |
|---|---|---|---|---|---|---|---|---|---|
| | Ws/Wm | ΔHSP (s-m) | Ws/Wp | ΔHSP (s-p) | | Preservation stability | Rubfastness | Blocking resistance | Image quality |
| Example 24 | 3.0 | 16.0 | 3.0 | 12.5 | 0.20 | 4 | 5 | 5 | 5 |
| Example 25 | 3.0 | 16.1 | 3.0 | 12.5 | 0.20 | 4 | 5 | 5 | 5 |
| Example 26 | 3.0 | 15.6 | 3.0 | 12.5 | 0.20 | 3 | 5 | 5 | 5 |
| Example 27 | 3.0 | 20.3 | 3.0 | 12.5 | 0.20 | 5 | 4 | 5 | 4 |
| Reference Example 28 | 3.0 | 23.7 | 3.0 | 18.8 | 0.20 | 5 | 3 | 4 | 3 |
| Reference Example 29 | 3.0 | 17.1 | 3.0 | 9.7 | 0.20 | 5 | 5 | 4 | 5 |
| Reference Example 30 | 3.0 | 18.7 | 3.0 | 11.4 | 0.20 | 5 | 5 | 3 | 5 |
| Reference Example 31 | 3.0 | 19.1 | 3.0 | 11.9 | 0.20 | 5 | 5 | 3 | 5 |
| Example 32 | 3.0 | 19.7 | 3.0 | 12.5 | 2.00 | 5 | 5 | 5 | 4 |
| Example 33 | 3.0 | 18.0 | 3.0 | 11.9 | 0.20 | 5 | 5 | 5 | 5 |
| Comparative Example 1 | 1.0 | 19.7 | 3.0 | 12.5 | 0.20 | 5 | 1 | 5 | 1 |
| Comparative Example 2 | 1.0 | 19.7 | 1.0 | 12.5 | 0.20 | 5 | 1 | 5 | 1 |
| Comparative Example 3 | 3.0 | 14.6 | 3.0 | 12.5 | 0.20 | 1 | 5 | 5 | 5 |
| Comparative Example 4 | 3.0 | 11.9 | 3.0 | 12.5 | 0.20 | 1 | 5 | 5 | 5 |
| Comparative Example 5 | 3.0 | 7.2 | 3.0 | 0.9 | 0.20 | 1 | 5 | 5 | 5 |
| Comparative Example 6 | 3.0 | 25.9 | 3.0 | 18.8 | 0.20 | 5 | 1 | 4 | 1 |
| Comparative Example 7 | 1.0 | 16.8 | 1.0 | 11.4 | 0.20 | 5 | 1 | 4 | 1 |

Descriptions of Table 2-1 and Table 3-1

For the components in the inks, only the water-soluble organic solvent and the polymer P and the polymerizable monomer M in the specified particles are described, and the other components in the ink are omitted.

The contents of the water-soluble organic solvent, the polymer P, and the polymerizable monomer M are each the content relative to the total ink amount.

The abbreviations of the water-soluble organic solvents mean the following.

- ·PG: propylene glycol
- ·1,2-BD: 1,2-butanediol
- ·MP Diol: 2-methyl-1,3-propanediol
- ·DEG: diethylene glycol
- ·DPGmME: dipropylene glycol monomethyl ether
- ·EG: ethylene glycol

The abbreviations of the polymerizable monomers M mean the following.

·SR833S: tricyclodecanedimethanol diacrylate, manufactured by Sartomer
·GPO3A: trifunctional acrylate GPO3A described below (molecular weight: 470)
·SR295: pentaerythritol tetraacrylate, manufactured by Sartomer
·A-400: polyethylene glycol #400 diacrylate, manufactured by Shin Nakamura Chemical Co., Ltd.
·VISCOAT #802: mixture of tripentaerythritol acrylate, mono- and di-pentaerythritol acrylate, and polypentaerythritol acrylate, molecular weight: 805, manufactured by OSAKA ORGANIC CHEMICAL INDUSTRY LTD.
·SR339: 2-phenoxyethyl acrylate, manufactured by Sartomer
·SR268: tetraethylene glycol diacrylate, manufactured by Sartomer
·FA-513A: dicyclopentanyl acrylate, manufactured by Hitachi Chemical Company, Ltd.
·SR238: 1,6-hexanediol diacrylate, manufactured by Sartomer

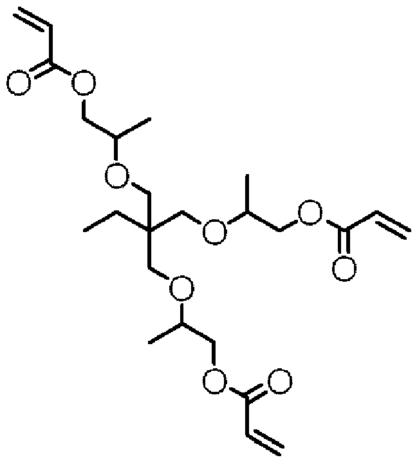

**GPO3A**

As described in Table 2-1 to Table 3-2, each of Examples employed

an ink containing water, a water-soluble organic solvent, and particles including the polymer P and the polymerizable monomer M,
wherein Ws/Wm, which is a ratio of the mass content Ws of the water-soluble organic solvent to the mass content Wm of the polymerizable monomer M, is 1.1 or more, and
ΔHSP(s-m), which is the HSP distance between the water-soluble organic solvent and the polymerizable monomer M, is 15.0 $MPa^{1/2}$ to 25.0 $MPa^{1/2}$.

In each of these Examples, the ink had high preservation stability and the image had high rubfastness. In each of these Examples, the image also had high blocking resistance and high image quality.
In contrast to each of the Examples, in Comparative Examples 1, 2, and 7 in which Ws/Wm is less than 1.1, the images had lower rubfastness.
In Comparative Examples 3 to 5 in which ΔHSP(s-m) is less than 15.0 $MPa^{1/2}$, the inks had lower preservation stability.
In Comparative Example 6 in which ΔHSP(s-m) is more than 25.0 $MPa^{1/2}$, the image had lower rubfastness.
The results of Examples 1 to 3 and 6 have demonstrated that, when the Ws/Wm ratio is 2.0 or more (Examples 1 to 3), the image has further improved rubfastness.
The results of Examples 1 to 3 and 7 have demonstrated that, when the Ws/Wm ratio is 6.0 or less (Examples 1 to 3), the ink has further improved preservation stability.
The results of Examples 8 and 9 have demonstrated that, when ΔHSP(s-p) is 8.0 $MPa^{1/2}$ or more (Example 9), the ink has further improved preservation stability.
The results of Examples 10 and 11 have demonstrated that, when ΔHSP(s-p) is 16.0 $MPa^{1/2}$ or less (Example 10), the image has further improved rubfastness.
The results of Examples 1 to 5 and 12 have demonstrated that, when the Ws/Wp ratio, which is the ratio of the mass content Ws of the water-soluble organic solvent to the mass content Wp of the polymer P, is 1.0 or more (Examples 1 to 5), the image has further improved rubfastness.

The results of Examples 1 to 5, 13, and 14 have demonstrated that, when the Ws/Wp ratio is 6.0 or less (Examples 1 to 5), the ink has further improved preservation stability.

The results of Examples 1 and 16 have demonstrated that, when the polymer P has a glass transition temperature Tg of 80°C or less (Example 1), the image has further improved image quality.

The results of Examples 1 and 17 have demonstrated that, when the polymer P has a weight-average molecular weight of 10000 or more (Example 1), the ink has further improved preservation stability.

The results of Examples 1 and 18 have demonstrated that, when the polymer P has a weight-average molecular weight of 50000 or less (Example 1), the image has further improved blocking resistance.

The results of Examples 19 to 22 have demonstrated that, when the polymerizable monomer M includes the monomer (M-1) having a viscosity at 25°C of 10 mPa·s to 150 mPa·s, and the monomer (M-1) content relative to the total amount of the polymerizable monomer M is 50 mass% or more (Examples 20 and 21), the ink has further improved preservation stability and the image has further improved rubfastness.

The results of Examples 1 and 33 and Reference Examples 29 to 31 have demonstrated that, when, in the ink, of the total amount of the water-soluble organic solvent, the content of the solvent (S-1) having a boiling point of 190°C or less is 50 mass% or more (Examples 1 and 33), the image has further improved blocking resistance.

## Claims

**1.** An ink jet ink comprising:

water, a water-soluble organic solvent, and particles including a polymer P and a polymerizable monomer M,
wherein, when a mass content of the water-soluble organic solvent is defined as Ws and a mass content of the polymerizable monomer M is defined as Wm, a Ws/Wm ratio is 1.1 or more, and
ΔHSP(s-m), which is an HSP distance between the water-soluble organic solvent and the polymerizable monomer M, is 15.0 $MPa^{1/2}$ to 25.0 $Mpa^{1/2}$,

wherein the polymer P includes a chain polymer, and
wherein the water-soluble organic solvent includes a solvent (S-1) having a boiling point of 190°C or less, and

a content of the solvent (S-1) relative to a total amount of the water-soluble organic solvent is 60 mass% or more.

**2.** The ink jet ink according to claim 1, wherein the Ws/Wm ratio is 2.0 to 6.0.

**3.** The ink jet ink according to claim 1 or claim 2, wherein ΔHSP(s-p), which is an HSP distance between the water-soluble organic solvent and the polymer P, is 8.0 $MPa^{1/2}$ to 16.0 $MPa^{1/2}$.

**4.** The ink jet ink according to any one of claim 1 to claim 3, wherein, when a mass content of the water-soluble organic solvent is defined as Ws and a mass content of the polymer P is defined as Wp, a Ws/Wp ratio is 1.0 to 6.0.

**5.** The ink jet ink according to any one of claim 1 to claim 4, wherein the polymer P includes a bond U being at least one of a urethane bond or a urea bond.

**6.** The ink jet ink according to any one of claim 1 to claim 5, wherein the polymer P has a glass transition temperature of 80°C or less.

**7.** The ink jet ink according to any one of claim 1 to claim 6, wherein the polymer P has a weight-average molecular weight of 10000 to 50000.

**8.** The ink jet ink according to any one of claim 1 to claim 7, wherein the polymerizable monomer M includes a monomer (M-1) having a viscosity at 25°C of 10 mPa ·s to 150 mPa ·s, and
a content of the monomer (M-1) relative to a total amount of the polymerizable monomer M is 50 mass% or more.

**9.** An ink jet recording method comprising:

a step of applying, onto a substrate, the ink jet ink according to any one of claim 1 to claim 8 by an ink jet process; and
a step of irradiating the ink jet ink having been applied onto the substrate, with an actinic energy ray,

wherein a time from landing of the ink jet ink onto the substrate to starting of the irradiation with the actinic energy ray is 1.00 second or less.

## Patentansprüche

1. Tintenstrahltinte, umfassend:

   Wasser, ein wasserlösliches organisches Lösungsmittel und Partikel, die ein Polymer P und ein polymerisierbares Monomer M enthalten,
   wobei, wenn ein Massengehalt des wasserlöslichen organischen Lösungsmittels als Ws definiert ist und ein Massengehalt des polymerisierbaren Monomers M als Wm definiert ist, ein Ws/Wm-Verhältnis 1,1 oder mehr beträgt, und
   ∆HSP(s-m), der eine HSP-Distanz zwischen dem wasserlöslichen organischen Lösungsmittel und dem polymerisierbaren Monomer M ist, 15,0 $MPa^{1/2}$ bis 25,0 $MPa^{1/2}$ beträgt,
   wobei das Polymer P ein Kettenpolymer enthält, und
   wobei das wasserlösliche organische Lösungsmittel ein Lösungsmittel (S-1) mit einem Siedepunkt von 190 °C oder weniger enthält, und
   ein Gehalt des Lösungsmittels (S-1) relativ zu einer Gesamtmenge des wasserlöslichen organischen Lösungsmittels 60 Massen-% oder mehr beträgt.

2. Tintenstrahltinte nach Anspruch 1, wobei das Ws/Wm-Verhältnis 2,0 bis 6,0 beträgt.

3. Tintenstrahltinte nach Anspruch 1 oder 2, wobei ∆HSP(s-p), der eine HSP-Distanz zwischen dem wasserlöslichen organischen Lösungsmittel und dem Polymer P ist, 8,0 $MPa^{1/2}$ bis 16,0 $MPa^{1/2}$ beträgt.

4. Tintenstrahltinte nach einem der Ansprüche 1 bis 3, wobei, wenn ein Massengehalt des wasserlöslichen organischen Lösungsmittels als Ws definiert ist und ein Massengehalt des Polymers P als Wp definiert ist, ein Ws/Wp-Verhältnis 1,0 bis 6,0 beträgt.

5. Tintenstrahltinte nach einem der Ansprüche 1 bis 4, wobei das Polymer P eine Bindung U, die mindestens eine von einer Urethanbindung und einer Harnstoffbindung ist, enthält.

6. Tintenstrahltinte nach einem der Ansprüche 1 bis 5, wobei das Polymer P eine Glasübergangstemperatur von 80 °C oder weniger aufweist.

7. Tintenstrahltinte nach einem der Ansprüche 1 bis 6, wobei das Polymer P ein gewichtsmittleres Molekulargewicht von 10000 bis 50000 aufweist.

8. Tintenstrahltinte nach einem der Ansprüche 1 bis 7, wobei das polymerisierbare

   Monomer M ein Monomer (M-1) mit einer Viskosität bei 25 °C von 10 mPa·s bis 150 mPa·s enthält, und
   ein Gehalt des Monomers (M-1) relativ zu einer Gesamtmenge des polymerisierbaren Monomers M 50 Massen-% oder mehr beträgt.

9. Tintenstrahl-Aufzeichnungsverfahren, umfassend:

   einen Schritt des Aufbringens der Tintenstrahltinte nach einem der Ansprüche 1 bis 8 durch einen Tintenstrahlprozess auf ein Substrat; und
   einen Schritt des Bestrahlens der Tintenstrahltinte, die auf das Substrat aufgebracht worden ist, mit einem aktinischen Energiestrahl,
   wobei eine Zeit von Auftreffen der Tintenstrahltinte auf das Substrat bis Start der Bestrahlung mit dem aktinischen Energiestrahl 1,00 Sekunde oder weniger beträgt.

## Revendications

1. Encre à jet d'encre comprenant :

de l'eau, un solvant organique hydrosoluble et des particules incluant un polymère P et un monomère polymérisable M,
dans laquelle, lorsqu'une teneur en masse du solvant organique hydrosoluble est définie comme Ws et une teneur en masse du monomère polymérisable M est définie comme Wm, un rapport Ws/Wm est de 1,1 ou plus, et ΔHSP(s-m), qui est une distance HSP entre le solvant organique hydrosoluble et le monomère polymérisable M, est de 15,0 $MPa^{1/2}$ à 25,0 $MPa^{1/2}$,
dans laquelle le polymère P inclut un polymère en chaîne, et
dans laquelle le solvant organique hydrosoluble inclut un solvant (S-1) ayant un point d'ébullition de 190 °C ou moins, et
une teneur en solvant (S-1) par rapport à une quantité totale du solvant organique hydrosoluble est de 60 % en masse ou plus.

**2.** Encre à jet d'encre selon la revendication 1, dans laquelle le rapport Ws/Wm est de 2,0 à 6,0.

**3.** Encre à jet d'encre selon la revendication 1 ou la revendication 2, dans laquelle ΔHSP(s-p), qui est une distance HSP entre le solvant organique hydrosoluble et le polymère P, est de 8,0 $MPa^{1/2}$ à 16,0 $MPa^{1/2}$.

**4.** Encre à jet d'encre selon l'une quelconque des revendications 1 à 3, dans laquelle, lorsqu'une teneur en masse du solvant organique hydrosoluble est définie comme Ws et une teneur en masse du polymère P est définie comme Wp, un rapport Ws/Wp est de 1,0 à 6,0.

**5.** Encre à jet d'encre selon l'une quelconque des revendications 1 à 4, dans laquelle le polymère P inclut une liaison U étant au moins l'une d'une liaison uréthane ou d'une liaison urée.

**6.** Encre à jet d'encre selon l'une quelconque des revendications 1 à 5, dans laquelle le polymère P a une température de transition vitreuse de 80 °C ou moins.

**7.** Encre à jet d'encre selon l'une quelconque des revendications 1 à 6, dans laquelle le polymère P a un poids moléculaire moyen en poids de 10 000 à 50 000.

**8.** Encre à jet d'encre selon l'une quelconque des revendications 1 à 7, dans laquelle le monomère polymérisable M inclut un monomère (M-1) ayant une viscosité à 25 °C de 10 mPa·s à 150 mPa·s, et
une teneur en monomère (M-1) par rapport à une quantité totale du monomère polymérisable M est de 50 % en masse ou plus.

**9.** Procédé d'enregistrement à jet d'encre comprenant :

une étape consistant à appliquer, sur un substrat, l'encre à jet d'encre selon l'une quelconque des revendications 1 à 8 par un processus de jet d'encre ; et
une étape consistant à irradier l'encre ayant été appliquée sur le substrat, avec un rayon d'énergie actinique, dans lequel un temps écoulé entre le dépôt de l'encre à jet d'encre sur le substrat et le début de l'irradiation par le rayon d'énergie actinique est de 1,00 seconde ou moins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6584677 B
- JP 6047904 B
- WO 2019188522 A1
- JP 6510681 B
- WO 2016052053 A
- JP 7159983 A
- JP H7159983 A
- JP 7031399 B
- JP H731399 B
- JP 8224982 A
- JP H8224982 A
- JP 10000863 A
- JP H10863 A
- JP 9134011 A
- JP H9134011 A
- JP 2004514014 A
- JP 2010024276 A
- JP 6107718 A
- JP H6107718 A
- JP 2014040529 A
- JP 2009058750 A
- JP 60132767 A
- US 6084250 A


### Non-patent literature cited in the description


- **K. W. SUH** ; **J. M. CORBETT**. *Journal of Applied Polymer Science*, 1968, vol. 12, 2359
- Crosslinking Agent Handbook. TAISEISHA LTD, 1981
- UV/EB Curing Handbook (Raw Material). Kobunshi Kankokai, 1985
- Applications and Markets of UV/EB Curing Techniques. CMC Publishing Co., Ltd, 1989, 79
- Polyester Resin Handbook. THE NIKKAN KOGYO SHIMBUN, LTD, 1988